# EUROPEAN PATENT APPLICATION

(11) **EP 4 132 118 A1**
(43) Date of publication of application: **08.02.2023**
(21) Application number: 21788286.9
(22) Date of filing: 12.03.2021
(51) Int. Cl.: H04W 52/02

(54) **METHOD FOR SWITCHING RECEIVE CHAIN OPEN STATE, AND FIRST MULTILINK DEVICE**

(30) Priority: 17.04.2020 CN 202010307457
(71) Applicant: Huawei Technologies Co., Ltd., Shenzhen, Guangdong 518129 (CN)
(72) Inventor: LI, Yunbo, Shenzhen, Guangdong 518129 (CN); GUO, Yuchen, Shenzhen, Guangdong 518129 (CN); GAN, Ming, Shenzhen, Guangdong 518129 (CN)
(74) Representative: Pfenning, Meinig & Partner mbB
(86) International application number: PCT/CN2021/080469
(87) International publication number: WO 2021/208652

(57) **Abstract**

This application provides a receive chain enabled state switching method and a first multi-link device. The method includes: A first multi-link device receives, by using a first link, a first frame sent by a second multi-link device to the first multi-link device; and the first multi-link device makes one or more second links be in a multi-receive-chain enabled state, where the second link is a link that is between the first multi-link device and the second multi-link device and that is different from the first link. The method provided in this application helps the second multi-link device perform data transmission with the first multi-link device on the second link in a timely manner by using a plurality of spatial flows. This application may be applied to a plurality of Wi-Fi systems supporting an 802.11 standard, for example, the 802.11be standard.

## Description

This application claims priority to Chinese Patent Application No. 2020103074572, filed with the China National Intellectual Property Administration on April 17, 2020 and entitled "RECEIVE CHAIN ENABLED STATE SWITCHING METHOD AND FIRST MULTI-LINK DEVICE", which is incorporated herein by reference in its entirety.

### TECHNICAL FIELD

This application relates to the field of communications technologies, and in particular, to a receive chain enabled state switching method and a first multi-link device.

### BACKGROUND

With development of wireless technologies, a growing quantity of wireless devices support multiband communication. For example, communication is performed on 2.4 GHz, 5 GHz, and 60 GHz frequency bands at the same time, or communication is performed on different channels of a same frequency band (or different frequency bands) at the same time, to increase a communication rate between devices. Such devices are usually referred to as multiband devices, or multi-link devices, and sometimes are alternatively referred to as multi-link entities or multiband entities. The following uses a multi-link device as an example for description.

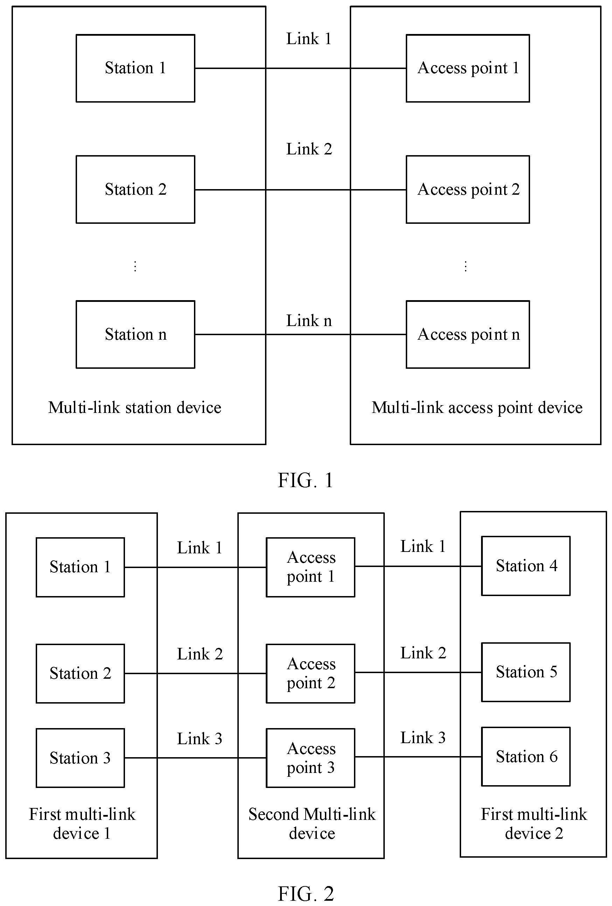

The multi-link device may be an access point device, or a station device. If the multi-link device is an access point device, the multi-link device includes one or more access points (access points, APs). If the multi-link device is a station device, the multi-link device includes one or more non-access point stations (non-access point stations, non-AP STAs). For example, as shown in FIG. 1, a multi-link access point device includes an access point 1 to an access point n, and a multi-link station device includes a station 1 to a station n. The access point 1 and the station 1 correspond to a link 1, the access point 2 and the station 2 correspond to a link 2, and the access point n and the station n correspond to a link n. The multi-link access point device may send a data frame to the multi-link station device by using the link 1 to the link n.

A multi-link operation greatly increases a receive rate of the multi-link device. However, because a plurality of links need to be in a working state at the same time, more energy of the multi-link device needs to be consumed. Therefore, a dynamic spatial multiplexing power save mechanism is currently proposed to save energy of the multi-link device. The dynamic spatial multiplexing power save mechanism is a power save mechanism based on a quantity of spatial flows (related to a quantity of antennas). A first multi-link device supporting the mechanism enables only one receive chain (receive chain) of a link when no data is received on the link. After obtaining a transmission opportunity (transmission opportunity, TXOP) on the link, a second multi-link device may send a start frame to the first multi-link device by using the link, so that the first multi-link device switches a state of the link to a multi-receive-chain enabled state. The start frame may be understood as the first frame sent to the first multi-link device by using the link. After enabling a plurality of receive chains of the link, the first multi-link device sends, to the second multi-link device by using the link, a response frame used for indicating that the plurality of receive chains of the link are enabled. After receiving the response frame, the second multi-link device may communicate with the first multi-link device on the link by using a plurality of spatial flows, to improve transmission efficiency. After a frame interaction sequence on the link ends, the first multi-link device immediately switches the state of the link back to a single-receive-chain enabled state. For example, the first multi-link device is the multi-link station device in FIG. 1, and the second multi-link device is the multi-link access point device in FIG. 1. When no data is received on the link 1 of the multi-link station device, only one receive chain of the link 1 is enabled. After the access point 1 obtains a transmission opportunity (transmission opportunity, TXOP) on the link 1, the access point 1 sends a start frame to the station 1 by using the link 1. After receiving the start frame, the station 1 switches a state of the link 1 to the multi-receive-chain enabled state. After enabling a plurality of receive chains of the link 1, the multi-link station device sends, to the multi-link access point device by using the link 1, a response frame used for indicating that the plurality of receive chains of the link 1 are enabled. After receiving the response frame, the multi-link access point device may communicate with the multi-link station device on the link 1 by using a plurality of spatial flows. After a frame interaction sequence on the link 1 ends, the multi-link station device immediately switches the state of the link 1 back to the single-receive-chain enabled state. This applies to the link 2 to the link n, and details are not described herein.

In an existing solution, after obtaining a TXOP on a link, the second multi-link device needs to first perform frame interaction with the first multi-link device by using the link, to switch a state of the link to the multi-receive-chain enabled state. Only after the state of the link is switched to the multi-receive-chain enabled state, the second multi-link device can improve system transmission efficiency on the link by using a plurality of spatial flows. It can be learned that, after obtaining a TXOP on a link, the second multi-link device cannot perform data transmission with the first multi-link device on the link in a timely manner by using a plurality of spatial flows.

### SUMMARY

This application provides a receive chain enabled state switching method and a first multi-link device, so that a second link of the first multi-link device can be in a multi-receive-chain enabled state in a timely manner, and a second multi-link device can perform data transmission with the first multi-link device on the second link in a timely manner by using a plurality of spatial flows.

According to a first aspect, this application provides a receive chain enabled state switching method. The method includes: A first multi-link device receives, by using a first link, a first frame sent by a second multi-link device to the first multi-link device; and the first multi-link device makes one or more second links be in a multi-receive-chain enabled state, where the second link is a link that is between the first multi-link device and the second multi-link device and that is different from the first link. Based on the method described in the first aspect, the second multi-link device can perform data transmission with the first multi-link device on the second link in a timely manner by using a plurality of spatial flows.

In a possible implementation, the first multi-link device may further make the first link be in the multi-receive-chain enabled state after receiving, by using the first link, the first frame sent by the second multi-link device. Based on this possible implementation, when the first multi-link device does not support simultaneous transmit and receive (simultaneous transmit and receive, STR), the second multi-link device can make the second link be in the multi-receive-chain enabled state in a timely manner.

In a possible implementation, after the first multi-link device makes the one or more second links be in the multi-receive-chain enabled state, the first multi-link device performs frame interaction with the second multi-link device by using the second link, and the first multi-link device switches the state of the second link to a single-receive-chain enabled state when a frame interaction sequence on the second link ends. Based on this possible implementation, the state of the second link can be switched to the single-receive-chain enabled state in a timely manner, to help reduce power consumption of the first multi-link device.

In a possible implementation, after the first multi-link device makes the one or more second links be in the multi-receive-chain enabled state, the first multi-link device switches the state of the second link to a single-receive-chain enabled state when the first multi-link device does not receive, by using the second link within predetermined time, any frame sent by the second multi-link device to the first multi-link device. Based on this possible implementation, the state of the second link can be switched to the single-receive-chain enabled state in a timely manner, to help reduce power consumption of the first multi-link device. Optionally, the first multi-link device receives, by using the second link within predetermined time, any frame sent by the second multi-link device to the first multi-link device, and after a frame interaction sequence in which the frame is located ends, the first multi-link device switches the state of the second link to a single-receive-chain enabled state.

In a possible implementation, after the first multi-link device makes the one or more second links be in the multi-receive-chain enabled state, the first multi-link device switches the state of the second link to a single-receive-chain enabled state when the first multi-link device receives, by using the second link, a second frame sent by the second multi-link device, where the second frame is used for indicating to switch the state of the second link to the single-receive-chain enabled state. Based on this possible implementation, the state of the second link can be switched to the single-receive-chain enabled state in a timely manner, to help reduce power consumption of the first multi-link device. In a possible implementation, the first multi-link device has a plurality of stations, and the second link is a link corresponding to a station in an awake state in the first multi-link device. Enabling the link corresponding to the station in the awake state in the first multi-link device to be in the multi-receive-chain enabled state helps reduce power consumption of the first multi-link device.

In a possible implementation, the first frame carries a traffic identifier (TID), and the second link is a link mapped to the TID. To be specific, after receiving the first frame, the first multi-link device determines, based on the TID of the first frame, the one or more second links mapped to the TID. After the one or more second links are determined, the one or more second links are made to be in the multi-receive-chain enabled state. This possible implementation helps reduce power consumption of the first multi-link device.

Optionally, the first frame may be a start frame carrying a TID.

Optionally, the start frame does not carry a TID, and the first frame may alternatively be a frame carrying a TID after the start frame. After receiving, by using the first link, the start frame that does not carry a TID, the first multi-link device does not switch the state of the second link to the multi-receive-chain enabled state until subsequently receiving the first frame carrying the TID mapped to the second link.

Optionally, after the first multi-link device receives, by using the first link, the start frame that does not carry a TID and that is sent by the second multi-link device, if the first frame that is after the start frame and that is subsequently received by the first multi-link device by using the first link does not carry a TID, the first multi-link device may continue to detect whether there is a TID in subsequent other frames. In this way, there may be more opportunities of making the second link in the multi-receive-chain enabled state. Alternatively, if the first frame that is after the start frame and that is subsequently received by the first multi-link device by using the first link does not carry a TID, the first multi-link device may alternatively not continue to detect whether there is a TID in subsequent other frames. This implementation is easier.

Optionally, after the first multi-link device receives, by using the first link, the first frame carrying a TID, if the TID is not mapped to the second link, the first multi-link device may continue to detect, in subsequent other frames, whether there is a TID mapped to the second link. Until the first multi-link device receives, by using the first link, one frame carrying a TID mapped to the second link, the first multi-link device makes the second link be in the multi-receive-chain enabled state. Based on this optional manner, higher efficiency and higher flexibility can be achieved, and there is no excessive limitation on a sequence of transmitting frames on the first link. Alternatively, after the first multi-link device receives, by using the first link, the first frame carrying a TID, if the TID is not mapped to the second link, the first multi-link device may alternatively not continue to detect, in subsequent other frames, whether there is a TID mapped to the second link. This implementation is easier.

Optionally, after the first multi-link device switches the state of the second link to the multi-receive-chain enabled state based on the TID, the first multi-link device does not switch the state of the second link to the single-receive-chain enabled state before the frame interaction sequence of the first multi-link device and the second multi-link device on the second link ends. Based on this optional manner, after a service mapped to the second link is transmitted on the second link, the state of the second link can be switched to the single-receive-chain enabled state, and this implementation is easier. Alternatively, after the first multi-link device switches the state of the second link to the multi-receive-chain enabled state based on the TID, if a frame carrying another TID is received, and the another TID is not mapped to the second link, the state of the second link may alternatively be switched to the single-receive-chain enabled state, so that a receive chain enabled state of the second link can be controlled more flexibly.

In a possible implementation, after the first multi-link device makes the one or more second links be in the multi-receive-chain enabled state, the first multi-link device may further receive, by using the first link, a third frame sent by the second multi-link device to the first multi-link device, where the third frame includes a traffic identifier (TID); and the first multi-link device switches a state of a target link in the one or more second links to the single-receive-chain enabled state, where the target link is a link not mapped to the TID in the one or more second links. This possible implementation helps reduce power consumption of the first multi-link device.

Optionally, the first frame is assumed to be the start frame. After the first multi-link device makes the second link be in the multi-receive-chain enabled state by using the start frame, if the first frame that is after the start frame and that is subsequently received by the first multi-link device by using the first link does not carry a TID, the state of the second link is maintained as the multi-receive-chain enabled state. Based on this optional manner, an opportunity of making the state of the second link the multi-receive-chain enabled state is not easily wasted, so that the second multi-link device can have more opportunities to transmit data on the second link by using a plurality of spatial flows. Alternatively, after the first multi-link device makes the second link be in the multi-receive-chain enabled state by using the start frame, if the first frame that is after the start frame and that is subsequently received by the first multi-link device by using the first link does not carry a TID, the state of the second link may alternatively be switched to the single-receive-chain enabled state. This implementation is easier.

Optionally, the first frame is assumed to be the start frame. After the first multi-link device receives, by using the first link, the start frame that does not carry a TID, if the first multi-link device receives, by using the first link, the first frame carrying a TID, and the TID is not mapped to the second link, the first multi-link device switches the state of the second link to the single-receive-chain enabled state. That is, the third frame may be the first frame that carries a TID and that is received by the first multi-link device by using the first link. If the TID in the first frame that carries the TID is not mapped to the second link, it is possible that none of TIDs in all subsequent frames are mapped to the second link. Therefore, this optional manner helps switch the state of the second link to the single-receive-chain enabled state in a timely manner, and can save energy of the second link. Alternatively, if the TID is not mapped to the second link, the state of the second link may alternatively not be switched to the single-receive-chain enabled state, so that there may be more opportunities of transmitting data on the second link by using a plurality of spatial flows. Optionally, the first frame is assumed to be the start frame. After the first multi-link device receives, by using the first link, the start frame that does not carry a TID, if the first multi-link device receives, by using the first link, the first frame carrying a TID, and the TID is not mapped to the second link, the first multi-link device switches the state of the second link to the single-receive-chain enabled state. After the state of the second link is switched to the single-receive-chain enabled state, if another frame carrying a TID mapped to the second link is received, the state of the second link may be switched to the multi-receive-chain enabled state. In this way, the receive chain enabled state of the second link can be switched more flexibly.

Optionally, the first frame is assumed to be the start frame. After the first multi-link device receives, by using the first link, the start frame that does not carry a TID, if the first multi-link device receives, by using the first link, the first frame carrying a TID, and the TID is mapped to the second link, the first multi-link device maintains the state of the second link as the multi-receive-chain enabled state, until the frame interaction sequence of the first multi-link device and the second multi-link device on the second link ends. Based on this optional manner, after a service mapped to the second link is transmitted on the second link, the state of the second link can be switched to the single-receive-chain enabled state, and this implementation is easier. Alternatively, if a frame carrying another TID is subsequently received, and the another TID is not mapped to the second link, the state of the second link may alternatively be switched to the single-receive-chain enabled state, so that the receive chain enabled state of the second link can be controlled more flexibly.

In a possible implementation, the first frame carries indication information used for indicating the one or more second links, and before the first multi-link device makes the one or more second links be in the multi-receive-chain enabled state, the first multi-link device may further determine the one or more second links based on the indication information. This possible implementation helps reduce power consumption of the first multi-link device.

In a possible implementation, the first frame is a data frame, the first frame includes a high throughput control (HT control) field of a high efficiency (HE) type, the high throughput control field includes an A-control (A-control) subfield, the A-control subfield includes a control (control) subfield, the control subfield includes a control information (control information) subfield and a control identifier (control ID) subfield, the control information subfield carries the indication information, the control identifier subfield carries a control identifier, and the control identifier is used for indicating that the control information subfield carries the indication information. The first frame provided in this possible implementation is a data frame of an existing type. The indication information is carried by using this frame structure without additional signaling overheads, and a new frame type does not need to be added. In a possible implementation, the first frame is a control frame, and the indication information is carried in the following one or more subfields in a frame control field of the first frame: a to distributed system (to DS) subfield, a from distributed system (from DS) subfield, a more fragment (more frag) subfield, a retry (retry) subfield, a protected frame (protected frame) subfield, or a +high throughput control/order (+HTC/order) subfield. The indication information is carried by using the frame structure provided in this possible implementation, so that the indication information can be carried by using the data frame of the existing type without additional signaling overheads, and a new frame type does not need to be added. In this possible implementation, the second link is indicated by using a reserved field in an existing control frame without additional signaling overheads. A new frame type does not need to be added. A plurality of control frames may be used for this function.

In a possible implementation, the first frame is a control frame, a frame control (frame control) field of the first frame includes a subtype (subtype) subfield, the subtype subfield is used for indicating that the first frame carries an indication information field, and the indication information field carries the indication information. The first frame provided in this possible implementation is a control frame of a new type, so that in a process of multiplexing an existing frame, a legacy station can be prevented from affecting deciphering of the frame. The first frame provided in this possible implementation is a control frame of a new type. The indication information is carried by using this frame structure, so that the indication information can be carried more flexibly.

In a possible implementation, a frame control (frame control) field of the first frame includes a subtype (subtype) subfield, the subtype subfield is used for indicating that the first frame carries an extended control (extended control) field, the extended control field is used for indicating that the first frame carries an indication information field, and the indication information field carries the indication information. Because a quantity of reserved values of the subtype (subtype) subfield is small at present, only a small quantity of types of control frames can be indicated. There may be many available values of the extended control (extended control) field. Therefore, the subtype (subtype) subfield is combined with the extended control (extended control) field, to indicate that the first frame carries the indication information field, so that more types of control frames can be indicated.

In a possible implementation, the first frame is a trigger frame, a user information (user info) field of the first frame includes an association identifier AID 12 subfield, an AID subfield, and an indication information subfield, the AID 12 subfield is set to a specific value for indicating that the user information field carries the AID subfield and the indication information subfield, the AID subfield carries an identifier of a receiver, and the indication information subfield carries the indication information. The first frame provided in this possible implementation is a control frame of an existing type. The indication information is carried by using this frame structure without additional signaling overheads, and a new frame type does not need to be added. In addition, in a process of multiplexing a frame of an existing type, a legacy station can be prevented from affecting deciphering of the frame.

According to a second aspect, this application provides a receive chain enabled state switching method. The method includes: A first multi-link device sends a first frame to a second multi-link device by using a first link, where the first frame carries first indication information and second indication information, the first indication information is used for indicating a spatial multiplexing power save state of a second link, the second indication information is used for indicating one or more second links, and the second link is a link that is between the first multi-link device and the second multi-link device and that is different from the first link; the first multi-link device receives, by using the first link, a response frame sent by the second multi-link device for the first frame; and the first multi-link device makes the one or more second links be in a receive chain enabled state corresponding to the spatial multiplexing power save state indicated by the first indication information. The method described in the second aspect helps the second multi-link device perform data transmission with the first multi-link device on the second link in a timely manner by using a plurality of spatial flows.

In a possible implementation, after receiving, by using the first link, the response frame sent by the second multi-link device for the first frame, the first multi-link device may further make the first link be in the receive chain enabled state corresponding to the spatial multiplexing power save state indicated by the first indication information Based on this possible implementation, even if the first multi-link device does not support simultaneous transmit and receive (simultaneous transmit and receive, STR), the first multi-link device can make, in a timely manner, the second link be in the receive chain enabled state corresponding to the spatial multiplexing power save state indicated by the first indication information.

In a possible implementation, the second indication information is further used for indicating the first link. After receiving, by using the first link, the response frame sent by the second multi-link device for the first frame, the first multi-link device makes the first link be in the receive chain enabled state corresponding to the spatial multiplexing power save state indicated by the first indication information. Based on this possible implementation, only when the second indication information indicates the first link, the first link can be made to be in the receive chain enabled state corresponding to the spatial multiplexing power save state indicated by the first indication information, so that the receive chain enabled state of the first link can be switched more flexibly.

In a possible implementation, the first frame is a spatial multiplexing power save frame. The first frame includes a spatial multiplexing power control (SM power control) field, where the spatial multiplexing power control (SM power control) field carries the first indication information and the second indication information. Based on this possible implementation, the first indication information and the second indication information can be carried by using a field of an existing type without additional signaling overheads, and a new frame type does not need to be added.

In a possible implementation, the spatial multiplexing power control (SM power control) field includes a spatial multiplexing power save enabled (SM power save enabled) subfield. The first indication information is carried in the spatial multiplexing power save enabled (SM power save enabled) subfield. The second indication information is carried in the third bit (B2) to the seventh bit (B7) of the spatial multiplexing power control (SM power control) field. Based on this possible implementation, when the first indication information is carried in the spatial multiplexing power save enabled (SM power save enabled) subfield, a modification to an existing standard is small, and it is easier to carry the second indication information by using reserved bits in the spatial multiplexing power control (SM power control) field.

In a possible implementation, the spatial multiplexing power control (SM power control) field includes a spatial multiplexing power save enabled (SM power save enabled) subfield and a link indication subfield. The first indication information is carried in the spatial multiplexing power save enabled (SM power save enabled) subfield. The second indication information is carried in the link indication subfield. Based on this possible implementation, when the first indication information is carried in the spatial multiplexing power save enabled (SM power save enabled) subfield, a modification to an existing standard is small, and it is more flexible to carry the second indication information by using the link indication subfield in the spatial multiplexing power control (SM power control) field.

In a possible implementation, the first frame is a spatial multiplexing power save frame. The first frame includes a spatial multiplexing power control (SM power control) field and a link indication field, where the first indication information is carried in the spatial multiplexing power control (SM power control) field, and the second indication information is carried in the link indication field. Based on this possible implementation, when the first indication information is carried in the spatial multiplexing power control (SM power control) field, a modification to an existing standard is small, and it is more flexible to carry the second indication information by using the link indication field in the spatial multiplexing power save frame.

According to a third aspect, this application provides a receive chain enabled state switching method. The method includes: A second multi-link device receives, by using a first link, a first frame sent by a first multi-link device, where the first frame carries first indication information and second indication information, the first indication information is used for indicating a spatial multiplexing power save state of a second link, the second indication information is used for indicating one or more second links, and the second link is a link that is between the first multi-link device and the second multi-link device and that is different from the first link; and the second multi-link device sends a response frame for the first frame to the first multi-link device by using the first link.

In a possible implementation, the second indication information is further used for indicating the first link.

In a possible implementation, the first frame is a spatial multiplexing power save frame. The first frame includes a spatial multiplexing power control (SM power control) field, where the spatial multiplexing power control (SM power control) field carries the first indication information and the second indication information.

In a possible implementation, the spatial multiplexing power control (SM power control) field includes a spatial multiplexing power save enabled (SM power save enabled) subfield. The first indication information is carried in the spatial multiplexing power save enabled (SM power save enabled) subfield. The second indication information is carried in the third bit (B2) to the seventh bit (B7) of the spatial multiplexing power control (SM power control) field. In a possible implementation, the spatial multiplexing power control (SM power control) field includes a spatial multiplexing power save enabled (SM power save enabled) subfield and a link indication subfield. The first indication information is carried in the spatial multiplexing power save enabled (SM power save enabled) subfield. The second indication information is carried in the link indication subfield.

In a possible implementation, the first frame is a spatial multiplexing power save frame. The first frame includes a spatial multiplexing power control (SM power control) field and a link indication field, where the first indication information is carried in the spatial multiplexing power control (SM power control) field, and the second indication information is carried in the link indication field.

For beneficial effects of the third aspect, refer to the beneficial effects of the second aspect, and details are not described herein.

According to a fourth aspect, a communications apparatus is provided. The apparatus may be a first multi-link device, or an apparatus in the first multi-link device, or an apparatus that can be used with the first multi-link device. The communications apparatus may alternatively be a chip system. The communications apparatus may perform the method in the first aspect or the second aspect. Functions of the communications apparatus may be implemented by hardware, or may be implemented by hardware executing corresponding software. The hardware or the software includes one or more units corresponding to the functions. The unit may be software and/or hardware. For operations performed by the communications apparatus and beneficial effects thereof, refer to the method in the first aspect or the second aspect, and the beneficial effects thereof. Repeated content is not described again.

According to a fifth aspect, a communications apparatus is provided. The apparatus may be a second multi-link device, or an apparatus in the second multi-link device, or an apparatus that can be used with the second multi-link device. The communications apparatus may alternatively be a chip system. The communications apparatus may perform the method in the third aspect. Functions of the communications apparatus may be implemented by hardware, or may be implemented by hardware executing corresponding software. The hardware or the software includes one or more units corresponding to the functions. The unit may be software and/or hardware. For operations performed by the communications apparatus and beneficial effects thereof, refer to the method in the third aspect, and the beneficial effects thereof. Repeated content is not described again.

According to a sixth aspect, this application provides a communications apparatus. The communications apparatus may be a first multi-link device or a chip system. The communications apparatus includes at least one processor. When the processor invokes computer programs in a memory, a method performed by the first multi-link device in the method in the first aspect or the second aspect is performed.

According to a seventh aspect, this application provides a communications apparatus. The communications apparatus may be a second multi-link device or a chip system. The communications apparatus includes at least one processor. When the processor invokes computer programs in a memory, a method performed by the second multi-link device in the method in the third aspect is performed.

According to an eighth aspect, this application provides a communications apparatus. The communications apparatus may be a first multi-link device or a chip system. The communications apparatus includes a processor and a memory. The memory is configured to store computer programs. The processor is configured to execute the computer programs stored in the memory, so that the communications apparatus performs a method performed by the first multi-link device in the method in the first aspect or the second aspect.

According to a ninth aspect, this application provides a communications apparatus. The communications apparatus may be a second multi-link device or a chip system. The communications apparatus includes a processor and a memory. The memory is configured to store computer programs. The processor is configured to execute the computer programs stored in the memory, so that the communications apparatus performs a method performed by the second multi-link device in the method in the third aspect.

According to a tenth aspect, this application provides a communications apparatus. The communications apparatus may be a first multi-link device. The communications apparatus includes a processor, a memory, and a transceiver.

The transceiver is configured to receive a signal or send a signal. The memory is configured to store computer programs. The processor is configured to invoke the computer programs from the memory, to perform a method performed by the first multi-link device in the method in the first aspect or the second aspect.

According to an eleventh aspect, this application provides a communications apparatus. The communications apparatus may be a second multi-link device. The communications apparatus includes a processor, a memory, and a transceiver. The transceiver is configured to receive a signal or send a signal. The memory is configured to store computer programs. The processor is configured to invoke the computer programs from the memory, to perform a method performed by the second multi-link device in the method in the third aspect.

According to a twelfth aspect, this application provides a communications apparatus. The communications apparatus may be a first multi-link device or a chip system. The communications apparatus includes at least one processor and a communications interface. The processor runs computer programs, to perform a method performed by the first multi-link device in the method in the first aspect or the second aspect.

According to a thirteenth aspect, this application provides a communications apparatus. The communications apparatus may be a second multi-link device or a chip system. The communications apparatus includes at least one processor and a communications interface. The processor runs computer programs, to perform a method performed by the second multi-link device in the method in the third aspect.

According to a fourteenth aspect, this application provides a computer-readable storage medium. The computer-readable storage medium is configured to store instructions. When the instructions are executed, a method performed by the first multi-link device in the method in the first aspect or the second aspect is implemented.

According to a fifteenth aspect, this application provides a computer-readable storage medium. The computer-readable storage medium is configured to store instructions. When the instructions are executed, a method performed by the second multi-link device in the method in the third aspect is implemented.

According to a sixteenth aspect, this application provides a computer program product including instructions. When the instructions are executed, a method performed by the first multi-link device in the method in the first aspect or the second aspect is implemented.

According to a seventeenth aspect, this application provides a computer program product including instructions. When the instructions are executed, a method performed by the second multi-link device in the method in the third aspect is implemented.

### BRIEF DESCRIPTION OF DRAWINGS

FIG. 1 is a schematic diagram of an existing multi-link device;
FIG. 2 is a schematic diagram of a system architecture according to an embodiment of this application;
FIG. 3 is a schematic flowchart of a receive chain enabled state switching method according to an embodiment of this application;
FIG. 4 is a schematic diagram of a structure of a data frame according to an embodiment of this application;
FIG. 5 is a schematic diagram of a structure of an HT control field according to an embodiment of this application;
FIG. 6 is a schematic diagram of a structure of a control subfield according to an embodiment of this application;
FIG. 7 is a schematic diagram of a structure of another control subfield according to an embodiment of this application;
FIG. 8 is a schematic diagram of a structure of still another control subfield according to an embodiment of this application;
FIG. 9 is a schematic diagram of a structure of a frame control field according to an embodiment of this application;
FIG. 10 is a schematic diagram of a structure of a control frame according to an embodiment of this application;
FIG. 11 is a schematic diagram of a structure of a control frame according to an embodiment of this application;
FIG. 12 is a schematic diagram of a structure of a trigger frame according to an embodiment of this application;
FIG. 13 is a schematic diagram of receive chain enabled state switching according to an embodiment of this application;
FIG. 14 is a schematic diagram of receive chain enabled state switching according to an embodiment of this application;
FIG. 15 is a schematic diagram of receive chain enabled state switching according to an embodiment of this application;
FIG. 16 is a schematic diagram of receive chain enabled state switching according to an embodiment of this application;
FIG. 17 is a schematic diagram of receive chain enabled state switching according to an embodiment of this application;
FIG. 18 is a schematic diagram of a structure of a spatial multiplexing power control field of an existing standard;
FIG. 19 is a schematic flowchart of another receive chain enabled state switching method according to an embodiment of this application;
FIG. 20 is a schematic diagram of a structure of a spatial multiplexing power control field according to an embodiment of this application;
FIG. 21 is a schematic diagram of a structure of another spatial multiplexing power control field according to an embodiment of this application;
FIG. 22 is a schematic diagram of a structure of a spatial multiplexing power save frame according to an embodiment of this application;
FIG. 23 is a schematic diagram of a structure of a communications apparatus according to an embodiment of this application;
FIG. 24a is a schematic diagram of a structure of a communications apparatus according to an embodiment of this application; and
FIG. 24b is a schematic diagram of a structure of a communications apparatus according to an embodiment of this application.

### DESCRIPTION OF EMBODIMENTS

The following further describes specific embodiments of this application in detail with reference to accompanying drawings.

In the specification, claims, and accompanying drawings of the present invention, the terms "first", "second", "third", "fourth", and so on are intended to distinguish between different objects but do not indicate a particular order. In addition, terms "include", "have", and any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that particular features, structures, or characteristics described in the embodiments may be included in at least one embodiment of the present invention. The phrase shown in various locations in the specification may not necessarily refer to a same embodiment, and is not an independent or optional embodiment exclusive from another embodiment. It is explicitly and implicitly understood by persons skilled in the art that the embodiments described in the specification may be combined with another embodiment.

"A plurality of" refers to two or more than two. The term "and/or" describes an association between associated objects and indicates that three relationships may exist. For example, A and/or B may indicate the following three cases: Only A exists, both A and B exist, and only B exists. The character "/" usually indicates an "or" relationship between the associated objects.

The following first describes a system architecture to which the embodiments of this application may be applied.

FIG. 2 is a schematic diagram of a system architecture according to an embodiment of this application. As shown in FIG. 2, the system architecture includes a second multi-link device (multi-link device, MLD) and one or more first multi-link devices. In FIG. 2, an example in which the system architecture includes one second multi-link device and two first multi-link devices is used. The second multi-link device is a multi-link access point (access point, AP) device, and the first multi-link device is a multi-link non-access point station (non-access point station, non-AP STA) device.

For ease of description, the following describes a non-access point station in a form of a station. Alternatively, the second multi-link device is a multi-link station device, and the first multi-link device is a multi-link access point device. Alternatively, both the first multi-link device and the second multi-link device are multi-link station devices. Alternatively, both the first multi-link device and the second multi-link device are multi-link access point devices. Both the first multi-link device and the second multi-link device include a plurality of devices. For example, if the first multi-link device is a multi-link station device, the first multi-link device includes a plurality of stations. If the first multi-link device is a multi-link access point device, the first multi-link device includes a plurality of access points. Similarly, if the second multi-link device is a multi-link station device, the second multi-link device includes a plurality of stations. If the second multi-link device is a multi-link access point device, the second multi-link device includes a plurality of access points. FIG. 2 is described by using an example in which the first multi-link device includes a plurality of stations, and the second multi-link device includes a plurality of access points.

There are a plurality of links between the first multi-link device and the second multi-link device. As shown in FIG. 2, an example in which there are three links between the first multi-link device and the second multi-link device is used in FIG. 2. Both a station 1 of a first multi-link device 1 and a station 4 of a first multi-link device 2 are connected to an access point 1 of the second multi-link device by using a link 1. Both a station 2 of the first multi-link device 1 and a station 5 of the first multi-link device 2 are connected to an access point 2 of the second multi-link device by using a link 2. Both a station 3 of the first multi-link device 1 and a station 6 of the first multi-link device 2 are connected to an access point 3 of the second multi-link device by using a link 3.

The access point may be an access point for a terminal device (such as a mobile phone) to access a wired (or wireless) network, and is mainly deployed in a home, a building, and a park. A typical coverage radius is tens of meters to a hundred meters. Certainly, the access point may also be deployed outdoors. The access point is equivalent to a bridge that connects a wired network and a wireless network. A main function of the access point is to connect various wireless network clients together and then connect the wireless network to an Ethernet. Specifically, the access point may be a terminal device (such as a mobile phone) or a network device (such as a router) with a wireless fidelity (wireless fidelity, Wi-Fi) chip. The access point may be a device that supports the 802. 11be standard. The access point may alternatively be a device that supports a plurality of current and future wireless local area network (wireless local area network, WLAN) 802.11 family standards, such as 802.11ax, 802.11ac, 802.11n, 802.11g, 802.11b, and 802.11a. The station may be a wireless communications chip, a wireless sensor, or a wireless communications terminal. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communications device supporting a Wi-Fi communication function, or a computer supporting a Wi-Fi communication function. Optionally, the station may support the 802.11be standard. The station may also support a plurality of current and future wireless local area network (wireless local area network, WLAN) standards of the 802.11 family standards, such as 802.11ax, 802.11ac, 802.11n, 802.11g, 802.11b, and 802.11a.

For example, the access point and the station may be devices applied to an Internet of Vehicles, Internet of Things nodes, sensors, or the like in an Internet of Things (Internet of Things, IoT), smart cameras, smart remote controls, smart water or electricity meters, or the like in a smart home, or sensors in a smart city.

A multi-link operation greatly increases a receive rate of the multi-link device. However, because a plurality of links need to be in a working state at the same time, more energy of the multi-link device needs to be consumed. Therefore, a dynamic spatial multiplexing power save mechanism is currently proposed to save energy of the multi-link device. The dynamic spatial multiplexing power save mechanism is a power save mechanism based on a quantity of spatial flows (related to a quantity of antennas). When no data is received on a link, the first multi-link device supporting the mechanism enables only one receive chain (receive chain) of the link that is used to receive data. After obtaining a transmission opportunity (transmission opportunity, TXOP) on the link, the second multi-link device may send a start frame to the first multi-link device by using the link, so that the first multi-link device switches a state of the link to a multi-receive-chain enabled state.

It should be noted that, the start frame (start of a frame) in this application may be understood as the first frame sent to the first multi-link device by using the link. After enabling a plurality of receive chains of the link, the first multi-link device sends, to the second multi-link device by using the link, a response frame used for indicating that the plurality of receive chains of the link are enabled. After receiving the response frame, the second multi-link device may communicate with the first multi-link device on the link by using a plurality of spatial flows, to improve transmission efficiency. After a frame interaction sequence on the link ends, the first multi-link device immediately switches the state of the link back to a single-receive-chain enabled state. One frame interaction sequence includes one or more frame interactions. For example, the second multi-link device sends a frame 1 to the first multi-link device by using the link 1, and after receiving the frame 1, the first multi-link device sends a response frame for the frame 1 to the second multi-link device by using the link 1. This may be referred to as one frame interaction between the first multi-link device and the second multi-link device on the link 1. In an existing solution, the second multi-link device cannot make, in advance, a link be in the multi-receive-chain enabled state before obtaining a TXOP of the link. Therefore, the second multi-link device cannot perform data transmission with the first multi-link device on the link in a timely manner by using a plurality of spatial flows. For example, as shown in FIG. 2, the second multi-link device first obtains a TXOP on the link 1. The second multi-link device makes the link 1 be in the multi-receive-chain enabled state by sending a start frame on the link 1. Then, the second multi-link device obtains a TXOP on the link 2. The second multi-link device makes the link 2 be in the multi-receive-chain enabled state by sending a start frame on the link 2. It can be learned that, the first multi-link device cannot make, in advance, the link 2 be in the multi-receive-chain enabled state before obtaining the TXOP of the link 2. Further, after obtaining the TXOP of the link 2, the second multi-link device cannot perform data transmission with the first multi-link device on the link 2 in a timely manner by using a plurality of spatial flows.

To enable the second multi-link device to perform data transmission with the first multi-link device on the link 2 in a timely manner by using a plurality of spatial flows, the embodiments of this application provide a receive chain enabled state switching method and a first multi-link device. The following further describes the receive chain enabled state switching method and the first multi-link device provided in this application.

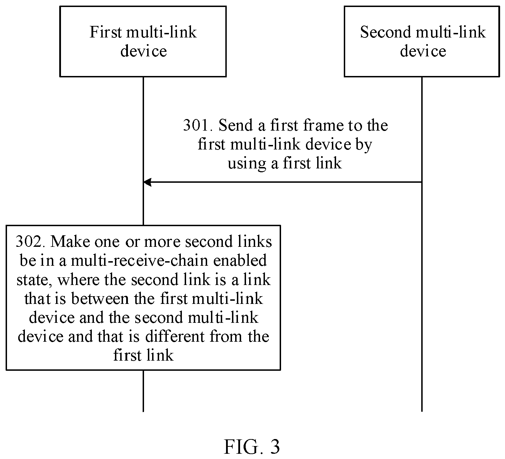

FIG. 3 is a schematic flowchart of a receive chain enabled state switching method according to an embodiment of this application. The receive chain enabled state switching method is applicable to a dynamic spatial multiplexing power save mechanism. As shown in FIG. 3, the receive chain enabled state switching method includes the following steps 301 and 302. The method shown in FIG. 3 may be executed by a first multi-link device and a second multi-link device. Alternatively, the method shown in FIG. 3 may be executed by a chip in the first multi-link device and a chip in the second multi-link device. FIG. 3 is described by using an example in which the first multi-link device and the second multi-link device execute the method.

301. The second multi-link device sends a first frame to the first multi-link device by using a first link.

The first multi-link device in step 301 and step 302 is any first multi-link device. For example, the first multi-link device in step 301 may be the first multi-link device 1 or the first multi-link device 2 in FIG. 2.

302. The first multi-link device makes one or more second links be in a multi-receive-chain enabled state, where the second link is a link that is between the first multi-link device and the second multi-link device and that is different from the first link.

In this embodiment of this application, after receiving, by using the first link, the first frame sent by the second multi-link device to the first multi-link device, the first multi-link device makes the one or more second links be in the multi-receive-chain enabled state. The one or more second links are some or all of links that are between the first multi-link device and the second multi-link device and that are different from the first link. For example, as shown in FIG. 2, if the first link is the link 1, the second link may be one or more of the link 2 and the link 3.

In a possible implementation, the first multi-link device has a plurality of stations, the second link is a link that is between the first multi-link device and the second multi-link device and that is different from the first link, and the second links are links corresponding to some or all of stations that are in an awake state (awake state) in the first multi-link device. A station in the awake state is a station that can perform frame interaction with an access point in the second multi-link device. For example, as shown in FIG. 2, the first link is assumed to be the link 1. If the station 2 and the station 3 are in the awake state, the second link may be one or more of the link 2 and the link 3. Enabling the link corresponding to the station in the awake state in the first multi-link device to be in the multi-receive-chain enabled state helps reduce power consumption of the first multi-link device.

The following describes two cases of the first frame:
Case 1: The first frame is a start frame (namely, the first frame) sent by the second multi-link device to the first multi-link device by using the first link. The start frame may be a data frame or a control frame.

If the first frame is the start frame sent by the second multi-link device to the first multi-link device by using the first link, because only a single receive chain is enabled on the first link, the second multi-link device specifically sends the first frame to the first multi-link device on the first link by using a single spatial flow. The first multi-link device specifically receives, by using the single receive chain of the first link, the first frame sent by the second multi-link device to the first multi-link device. After receiving the first frame, the first multi-link device may make the first link be in the multi-receive-chain enabled state, and make the one or more second links be in the multi-receive-chain enabled state.

After receiving the first frame, the first multi-link device may simultaneously make the first link and the one or more second links be in the multi-receive-chain enabled state. Alternatively, after receiving the first frame, the first multi-link device first makes the first link be in the multi-receive-chain enabled state, and then makes the one or more second links be in the multi-receive-chain enabled state. A time difference in multi-receive-chain state enabling between the two links is a delay caused by signal interaction between the first link and the second link.

In case 1, before the first multi-link device receives the first frame, because one receive chain is already enabled on the first link, the first link can be made to be in the multi-receive-chain enabled state only by enabling at least one another receive chain of the first link. Similarly, before the first multi-link device receives the first frame, because one receive chain is already enabled on the second link, the second link can be made to be in the multi-receive-chain enabled state only by enabling at least one another receive chain of the second link. Alternatively, before the first link receives the first frame, it is possible that the second link is already in the multi-connection-enabled state. In this case, the multi-connection-enabled state of the second link only needs to be maintained.

For example, as shown in FIG. 2, the link 1 is the first link, and both the link 2 and the link 3 are the second links. Both the link 1 and the link 2 are in a single-receive-chain enabled state, and the link 3 is in the multi-receive-chain enabled state. After the first multi-link device 1 receives the first frame by using the link 1, because one receive chain is already enabled on the link 1, the station 1 in the first multi-link device 1 enables at least one another receive chain of the link 1, to make the link 1 be in the multi-receive-chain enabled state. Because one receive chain is already enabled on the link 2, the station 2 in the first multi-link device 1 enables at least one another receive chain of the link 2, to make the link 2 be in the multi-receive-chain enabled state. Because the link 3 is already in the multi-receive-chain enabled state, the station 3 in the first multi-link device 1 only needs to maintain the multi-connection-enabled state of the link 3.

In a possible implementation, after making the first link be in the multi-receive-chain enabled state, the first multi-link device may send a response frame to the second multi-link device, where the response frame is used for indicating that the first link is in the multi-receive-chain enabled state, or the response frame is used for indicating that the first link and the second link are in the multi-receive-chain enabled state.

Case 1 may further resolve a technical problem that when the first multi-link device does not support simultaneous transmit and receive (simultaneous transmit and receive, STR), the second multi-link device cannot make the second link be in the multi-receive-chain enabled state in a timely manner. For example, as shown in FIG. 2, it is assumed that the first multi-link device 1 does not support simultaneous transmit and receive (simultaneous transmit and receive, STR). In a process in which the station 1 performs receiving on the link 1, the access point 2 cannot make the link 2 be in the multi-receive-chain enabled state. This is because the station 2 needs to reply with a response frame to the access point 2 on the link 2 to make the link 2 be in the multi-receive-chain enabled state, where the response frame is used for indicating the link 2 to be in the multi-receive-chain enabled state. However, in this case, the station 1 is in a receiving state, and the first multi-link device 1 does not support STR. Therefore, the station 2 cannot reply with the response frame on the link 2 (if the station 2 replies with the response frame on the link 2, reception of the station 1 on the link 1 is interfered). Therefore, the link 2 cannot be made to be in the multi-receive-chain enabled state. In other words, even if the station 2 makes the link 2 be in the multi-receive-chain enabled state, the access point 2 cannot confirm that a plurality of receive chains of the link 2 are already enabled. If the access point 2 transmits a next frame on the link 2 by using a plurality of spatial flows when the station 2 does not reply with the response frame, the frame may fail to be received because a plurality of receive chains are not enabled on the link 2. Therefore, when the first multi-link device 1 does not support STR, after receiving the start frame by using the link 1, the first multi-link device 1 not only makes the link 1 be in the multi-receive-chain enabled state, but also makes the link 2 be in the multi-receive-chain enabled state, so that the link 2 can be made to be in the multi-receive-chain enabled state in a timely manner, and the second multi-link device can perform data transmission with the first multi-link device on the link 2 in a timely manner by using a plurality of spatial flows.

In other words, if the first multi-link device is a non-AP MLD, in case 1, when the non-AP MLD receives, on the link 1, a start frame of a frame interaction sequence sent to the non-AP MLD, and enables a plurality of receive chains on the link 1, the non-AP MLD also enables a plurality of receive chains on the link 2 (When a non-AP MLD receives the start of a frame exchange sequence addressed to it on link 1, and enable multiple receive chains on this link 1, it also enables multiple receive chains on link 2). In this embodiment of this application, the start frame may alternatively be referred to as a start frame of a frame interaction sequence, or the first frame of the frame interaction sequence, and the frame interaction sequence may alternatively be referred to as a frame exchange sequence.

Case 2: The first frame may be a frame after the start frame sent by the second multi-link device to the first multi-link device by using the first link. In this case, the first frame may be any frame after the start frame. The first frame may be a data frame or a control frame.

In case 2, even if before receiving the first frame, the first multi-link device has received, by using the first link, the start frame sent by the second multi-link device to the first multi-link device, it is possible that the first multi-link device has not switched the state of the first link to the multi-receive-chain enabled state when the second multi-link device sends the first frame. Therefore, if the first link of the first multi-link device is already in the multi-receive-chain enabled state when the second multi-link device sends the first frame, the second multi-link device may specifically send the first frame to the first multi-link device on the first link by using a plurality of spatial flows. The first multi-link device may specifically receive the first frame on the first link by using a plurality of receive chains of the first link. If the first link is still in the single-receive-chain enabled state when the second multi-link device sends the first frame, the second multi-link device may specifically send the first frame to the first multi-link device on the first link by using a single spatial flow. The first multi-link device may specifically receive the first frame on the first link by using a single receive chain of the first link.

In a possible implementation, in case 2, after making the second link be in the multi-receive-chain enabled state, the first multi-link device may send a response frame to the second multi-link device by using the first link, where the response frame is used for indicating that the second link is in the multi-receive-chain enabled state.

In the method described in FIG. 3, it is possible that the second multi-link device first obtains a TXOP on the first link and then obtains a TXOP on the second link. After obtaining the TXOP on the first link, the second multi-link device sends the first frame by using the first link, so that the second link is made to be in the multi-receive-chain enabled state. In this way, after the TXOP is obtained on the second link, data transmission with the first multi-link device may be directly performed on the second link by using a plurality of spatial flows. It can be learned that, by implementing the method described in FIG. 3, the second multi-link device can perform data transmission with the first multi-link device on the second link in a timely manner by using a plurality of spatial flows.

The following describes how the first multi-link device switches the state of the second link to the single-receive-chain enabled state after making the one or more second links be in the multi-receive-chain enabled state.

After making the one or more second links be in the multi-receive-chain enabled state, the first multi-link device may switch the state of the second link to the single-receive-chain enabled state when any one of the following one or more conditions is met.

Condition 1: It is determined that the frame interaction sequence of the first multi-link device and the second multi-link device on the second link ends.

In a possible implementation, after the first multi-link device makes the one or more second links be in the multi-receive-chain enabled state, the first multi-link device may directly determine whether the frame interaction sequence of the first multi-link device and the second multi-link device on the second link ends. If it is determined that the frame interaction sequence of the first multi-link device and the second multi-link device on the second link ends, the state of the second link is switched to the single-receive-chain enabled state. Otherwise, the state of the second link continues to be maintained as the multi-receive-chain enabled state.

In another possible implementation, only after the first multi-link device performs frame interaction with the second multi-link device by using the second link, the first multi-link device can determine that the frame interaction sequence of the first multi-link device and the second multi-link device on the second link ends. For example, as shown in FIG. 2, the link 2 is the second link. Only after the station 2 receives, on the second link, any frame sent by the second multi-link device to the station 2, the station 2 can determine whether the frame interaction sequence on the link 2 ends. If the station 2 determines that the frame interaction sequence of the first multi-link device 1 and the second multi-link device on the link 2 ends, the station 2 switches the state of the second link to the single-receive-chain enabled state. Otherwise, the station 2 continues to maintain the state of the link 2 as the multi-receive-chain enabled state.

Whether the second link in the first multi-link device is in the multi-receive-chain enabled state is determined based on a frame interaction result on the first link. When the second link in the first multi-link device is in the multi-receive-chain enabled state, the second multi-link device may not obtain the TXOP on the second link, or although the second multi-link device has obtained the TXOP, the second multi-link device is communicating with another multi-link device by using the second link. In this case, before the first multi-link device performs frame interaction with the second multi-link device by using the second link, one or more of the following cases 1 to 3 of ending of the frame interaction sequence are already met. If the first multi-link device immediately switches the state of the second link to the single-receive-chain enabled state, an effect that the second link is made to be in the multi-receive-chain enabled state as soon as possible, so that the second multi-link device can communicate with the first multi-link device on the second link by using a plurality of spatial flows is not achieved as desired in this embodiment. Therefore, the first multi-link device is required to determine, only after performing frame interaction with the second multi-link device by using the second link, that the frame interaction sequence of the first multi-link device and the second multi-link device on the second link ends. In this way, it can be ensured that the state of the second link of the first multi-link device cannot be switched to the single-receive-chain enabled state before the first multi-link device performs frame interaction with the second multi-link device on the second link.

When determining that the second link meets any one of the following cases 1 to 3, the first multi-link device may determine that the frame interaction sequence of the first multi-link device and the second multi-link device on the second link ends.

Case 1: The first multi-link device receives, by using the second link, a unicast frame whose receiver address is a station in another first multi-link device. For example, as shown in FIG. 2, the second link is assumed to be the link 2. Both the station 2 and the station 5 are connected to the access point 2 by using the link 2. Therefore, both the station 2 and the station 5 can receive, by using the link 2, a frame sent by the access point 2. If the station 2 receives, by using the link 2, a unicast frame sent by the access point 2 to the station 5, it indicates that the second multi-link device subsequently wants to perform data transmission with the first multi-link device 2 by using the link 2. Therefore, if the station 2 receives, by using the link 2, the unicast frame sent by the access point 2 to the station 5, the station 2 determines that the frame interaction sequence of the first multi-link device 1 and the second multi-link device on the link 2 ends.

Case 2: The first multi-link device receives, by using the second link, a frame whose transmitter address is different from a transmitter address of a frame that enables the TXOP of the second link. For example, as shown in FIG. 2, the second link is assumed to be the link 2. The transmitter address of the frame that enables the TXOP of the link 2 is an address of the access point 2. If the station 5 is to perform channel contention, the station 5 needs to send a frame to the access point 2 for channel contention. Because both the station 2 and the station 5 are connected to the access point 2 by using the link 2, the frame sent by the station 5 to the access point 2 by using the link 2 may alternatively be received by the station 2. If the station 2 receives, by using the link 2, the frame sent by the station 5, it indicates that the second multi-link device may subsequently need to perform data transmission with the first multi-link device 2 by using the link 2. Therefore, if the station 2 receives, by using the link 2, the frame sent by the station 5, the station 2 determines that the frame interaction sequence of the first multi-link device 1 and the second multi-link device on the link 2 ends.

Case 3: A carrier sense mechanism indicates that an access medium (namely, the second link) is idle at a slot boundary of a transmission point coordination function interframe space (transmission point coordination function interframe space, TxPIFS). Case 3 is equivalent to that the first multi-link device does not receive, on the second link within a specific time, the frame sent by the second multi-link device to the first multi-link device. Therefore, when case 3 is met, the first multi-link device may determine that the frame interaction sequence of the first multi-link device and the second multi-link device on the second link ends.

Condition 2: The first multi-link device does not receive, by using the second link within predetermined time, any frame sent by the second multi-link device to the first multi-link device.

For example, the first multi-link device makes the second link be in the multi-receive-chain enabled state at a moment T0, and if the first multi-link device does not receive, by using the second link at a moment T0+delta_T, any frame sent by the second multi-link device to the first multi-link device, the first multi-link device may switch the state of the second link to the single-receive-chain enabled state. Otherwise, the state of the second link continues to be maintained as the multi-receive-chain enabled state. Herein, delta T is usually of a millisecond or sub-millisecond magnitude.

If any frame sent by the second multi-link device to the first multi-link device is received by using the second link before the moment T0+delta_T, after a frame interaction sequence in which the frame is located ends, the first multi-link device may switch the state of the second link to the single-receive-chain enabled state.

Condition 3: The first multi-link device receives, by using the second link, a second frame sent by the second multi-link device, where the second frame is used for indicating to switch the state of the second link to the single-receive-chain enabled state.

In other words, in condition 3, the second multi-link device may indicate, by using the second frame, the first multi-link device to switch the state of the second link to the single-receive-chain enabled state.

When any one of the foregoing condition 1 to condition 3 is met, the state of the second link is switched to the single-receive-chain enabled state. This helps reduce power consumption of the first multi-link device.

The following describes in detail switching, by the first multi-link device, a receive chain enabled state of the second link based on a TID:
Manner 1: The first frame carries a traffic identifier (traffic identifier, TID), the second link is a link that is between the first multi-link device and the second multi-link device and that is different from the first link, and the second links are some or all of links mapped to the TID. The TID carried in the first frame is used for identifying a service that needs to be subsequently transmitted between the first multi-link device and the second multi-link device. A link mapped to the TID indicates a link that can transmit the service identified by the TID. For example, a mapping relationship between a TID and links may be shown in the following Table 1. There is a mapping relationship between a TID 1 and the link 1 and the link 2, indicating that a service 1 can be transmitted by using the link 1 and the link 2. There is a mapping relationship between a TID 2 and the link 2 and the link 3, indicating that a service 2 can be transmitted by using the link 2 and the link 3. In manner 1, after receiving the first frame, the first multi-link device determines, based on the TID carried in the first frame, one or more second links mapped to the TID. After the one or more second links are determined, the one or more second links are made to be in the multi-receive-chain enabled state. The first multi-link device only needs to enable the link that is mapped to the TID and that is in the first multi-link device to be in the multi-receive-chain enabled state. This helps reduce power consumption of the first multi-link device.

**Table 1**

| TID | Links between the first multi-link device and the second multi-link device |
|---|---|
| TID 1 of the service 1 | Link 1 and link 2 |
| TID 2 of the service 2 | Link 2 and link 3 |

In manner 1, the first frame may be a start frame carrying a TID. After receiving the start frame, the first multi-link device needs to determine, based on the TID carried in the start frame, one or more second links mapped to the TID. After the one or more second links are determined, the one or more second links are made to be in the multi-receive-chain enabled state, and the first link is made to be in the multi-receive-chain enabled state.

Alternatively, in manner 1, the start frame does not carry a TID. The first frame may alternatively be a frame carrying a TID after the start frame. For example, the first frame may be the first frame carrying a TID mapped to the second link after the start frame. After receiving, by using the first link, the start frame that does not carry a TID, the first multi-link device does not switch the state of the second link to the multi-receive-chain enabled state until subsequently receiving the first frame carrying the TID mapped to the second link.

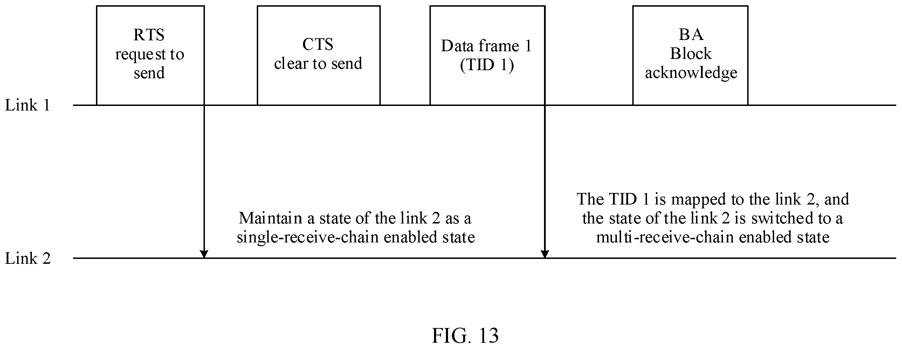

For example, as shown in FIG. 13, the start frame received by the first multi-link device 1 by using the link 1 is an RTS frame. Because the RTS frame does not carry a TID, after receiving the RTS frame, the first multi-link device 1 maintains the state of the link 2 as the single-receive-chain enabled state. The first multi-link device 1 subsequently receives, by using the link 1, a data frame 1 sent by the second multi-link device, where the data frame 1 carries the TID 1 mapped to the link 2. Because the TID 1 is mapped to the link 2, the first multi-link device switches the state of the link 2 to the multi-receive-chain enabled state.

Optionally, after the first multi-link device receives, by using the first link, the start frame that does not carry a TID and that is sent by the second multi-link device, if the first frame that is after the start frame and that is subsequently received by the first multi-link device by using the first link does not carry a TID, the first multi-link device may continue to detect whether there is a TID in subsequent other frames. In this way, there may be more opportunities of making the second link in the multi-receive-chain enabled state. Alternatively, if the first frame that is after the start frame and that is subsequently received by the first multi-link device by using the first link does not carry a TID, the first multi-link device may alternatively not continue to detect whether there is a TID in subsequent other frames. This implementation is easier.

Optionally, after the first multi-link device receives, by using the first link, the first frame carrying a TID, if the TID is not mapped to the second link, the first multi-link device may continue to detect, in subsequent other frames, whether there is a TID mapped to the second link. Until the first multi-link device receives, by using the first link, one frame carrying a TID mapped to the second link, the first multi-link device makes the second link be in the multi-receive-chain enabled state. Based on this optional manner, higher efficiency and higher flexibility can be achieved, and there is no excessive limitation on a sequence of transmitting frames on the first link. Alternatively, after the first multi-link device receives, by using the first link, the first frame carrying a TID, if the TID is not mapped to the second link, the first multi-link device may alternatively not continue to detect, in subsequent other frames, whether there is a TID mapped to the second link. This implementation is easier.

Optionally, after the first multi-link device switches the state of the second link to the multi-receive-chain enabled state based on the TID, the first multi-link device does not switch the state of the second link to the single-receive-chain enabled state before the frame interaction sequence of the first multi-link device and the second multi-link device on the second link ends. Based on this optional manner, after a service mapped to the second link is transmitted on the second link, the state of the second link can be switched to the single-receive-chain enabled state, and this implementation is easier. Alternatively, after the first multi-link device switches the state of the second link to the multi-receive-chain enabled state based on the TID, if a frame carrying another TID is received, and the another TID is not mapped to the second link, the state of the second link may alternatively be switched to the single-receive-chain enabled state, so that a receive chain enabled state of the second link can be controlled more flexibly.

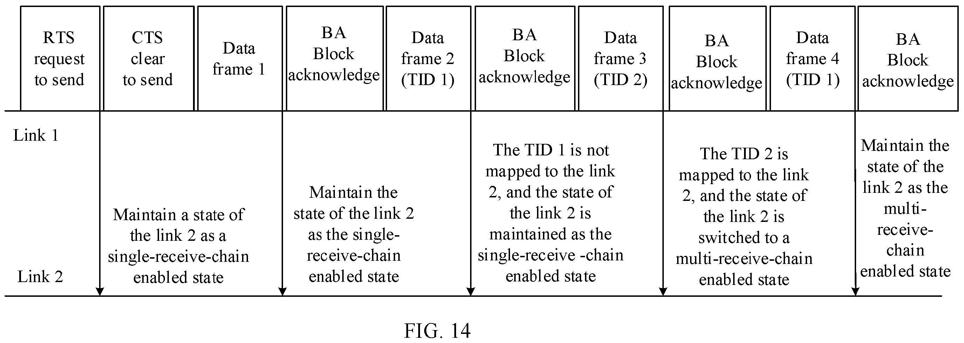

For example, as shown in FIG. 14, the start frame received by the first multi-link device 1 by using the link 1 is an RTS frame. Because the RTS frame does not carry a TID, after receiving the RTS frame, the first multi-link device 1 maintains the state of the link 2 as the single-receive-chain enabled state. The first multi-link device 1 subsequently receives, by using the link 1, the data frame 1 sent by the second multi-link device, where the data frame 1 does not carry a TID. The first multi-link device maintains the state of the link 2 as the single-receive-chain enabled state, and continues to detect whether there is a TID in subsequent other frames. The first multi-link device 1 further subsequently receives, by using the link 1, a data frame 2 sent by the second multi-link device, where the data frame 2 carries the TID 1. Because the TID 1 is not mapped to the link 2, the first multi-link device continues to maintain the state of the link 2 as the single-receive-chain enabled state, and continues to detect whether there is a TID mapped to the link 2 in subsequent other frames. The first multi-link device further subsequently receives, by using the link 1, a data frame 3 sent by the second multi-link device, where the data frame 3 carries the TID 2. Because the TID 2 is mapped to the link 2, the first multi-link device makes the link 2 be in the multi-receive-chain enabled state. If subsequently receiving a data frame 4, where the data frame 4 carries the TID 1, the first multi-link device still continues to maintain the state of the link 2 as the multi-receive-chain enabled state, until the frame interaction sequence of the first multi-link device and the second multi-link device on the link 2 ends.

In summary, do not switch to a plurality of receive chains on the link 2 until a TID carried in a subsequent frame is mapped to the link 2 (don't switch to multiple receive chains on link 2 until TID carried in following frame is mapped to link 2). Switch to the plurality of receive chains of the link 2 after the first frame carrying a TID mapped to the link 2 is received (Switch to multiple receive chains after receiving the first frame with a TID that is mapped to link 2). After switch to the plurality of receive chains based on the first piece of data carrying a TID, do not switch to a single receive chain until the frame interaction sequence ends (After switch to multiple receive chains based on the first data with a TID, don't switch to single receive chain until the end of frame exchange sequence).

Optionally, in addition to meeting that the second link is a link that is between the first multi-link device and the second multi-link device and that is different from the first link, and the second link is a link mapped to a TID, the second link also needs to be a link corresponding to a station in an awake state in the first multi-link device. Manner 2: After the first multi-link device makes the one or more second links be in the multi-receive-chain enabled state, the first multi-link device may further receive, by using the first link, a third frame sent by the second multi-link device to the first multi-link device, where the third frame includes a traffic identifier (TID); and the first multi-link device switches a state of a target link in the one or more second links to the single-receive-chain enabled state, where the target link is a link not mapped to the TID in the one or more second links. This possible implementation helps reduce power consumption of the first multi-link device.

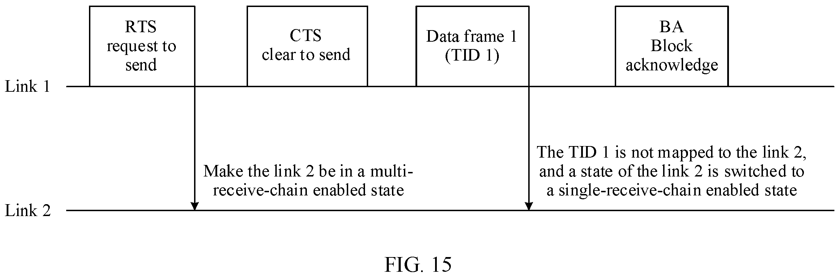

In this possible implementation, the first frame does not carry a TID. After receiving the first frame, the first multi-link device immediately switches a state of one or more links different from the first link that are between the first multi-link device and the second multi-link device to the multi-receive-chain enabled state. After subsequently receiving the third frame carrying a TID, the first multi-link device further switches a state of a link not mapped to the TID in the one or more second links to the single-receive-chain enabled state. The third frame may be any frame carrying a TID after the first frame. For example, the first frame is the start frame. As shown in FIG. 15, the start frame received by the first multi-link device 1 by using the link 1 is an RTS frame. Because the RTS frame does not carry a TID, after receiving the RTS frame, the first multi-link device 1 switches the state of the link 2 to the multi-receive-chain enabled state. The first multi-link device 1 subsequently receives, by using the link 1, the data frame 1 sent by the second multi-link device, where the data frame 1 carries the TID 1. Because the TID 1 is not mapped to the link 2, the first multi-link device switches the state of the link 2 to the single-receive-chain enabled state. In other words, after receiving the start frame, the first multi-link device immediately switches the state of the link 2 to the multi-receive-chain enabled state, and if a TID carried in a subsequent frame is not mapped to the link 2, the first multi-link device switches the state of the link 2 to the single-receive-chain enabled state.

Optionally, the first frame is assumed to be the start frame. After the first multi-link device makes the second link be in the multi-receive-chain enabled state by using the start frame, if the first frame that is after the start frame and that is subsequently received by the first multi-link device by using the first link does not carry a TID, the state of the second link is maintained as the multi-receive-chain enabled state. Based on this optional manner, an opportunity of making the state of the second link the multi-receive-chain enabled state is not easily wasted, so that the second multi-link device can have more opportunities to transmit data on the second link by using a plurality of spatial flows. Alternatively, after the first multi-link device makes the second link be in the multi-receive-chain enabled state by using the start frame, if the first frame that is after the start frame and that is subsequently received by the first multi-link device by using the first link does not carry a TID, the state of the second link may alternatively be switched to the single-receive-chain enabled state. This implementation is easier.

Optionally, the first frame is assumed to be the start frame. After the first multi-link device receives, by using the first link, the start frame that does not carry a TID, if the first multi-link device receives, by using the first link, the first frame carrying a TID, and the TID is not mapped to the second link, the first multi-link device switches the state of the second link to the single-receive-chain enabled state. If the TID in the first frame that carries the TID is not mapped to the second link, it is possible that none of TIDs in all subsequent frames are mapped to the second link. Therefore, this optional manner helps switch the state of the second link to the single-receive-chain enabled state in a timely manner, and can save energy of the second link. Alternatively, if the TID is not mapped to the second link, the state of the second link may alternatively not be switched to the single-receive-chain enabled state, so that there may be more opportunities of transmitting data on the second link by using a plurality of spatial flows.

Optionally, the first frame is assumed to be the start frame. After the first multi-link device receives, by using the first link, the start frame that does not carry a TID, if the first multi-link device receives, by using the first link, the first frame carrying a TID, and the TID is not mapped to the second link, the first multi-link device switches the state of the second link to the single-receive-chain enabled state. After the state of the second link is switched to the single-receive-chain enabled state, if another frame carrying a TID mapped to the second link is received, the state of the second link may be switched to the multi-receive-chain enabled state. In this way, the receive chain enabled state of the second link can be switched more flexibly.

Optionally, the first frame is assumed to be the start frame. After the first multi-link device receives, by using the first link, the start frame that does not carry a TID, if the first multi-link device receives, by using the first link, the first frame carrying a TID, and the TID is mapped to the second link, the first multi-link device maintains the state of the second link as the multi-receive-chain enabled state, until the frame interaction sequence of the first multi-link device and the second multi-link device on the second link ends. Based on this optional manner, after a service mapped to the second link is transmitted on the second link, the state of the second link can be switched to the single-receive-chain enabled state, and this implementation is easier. Alternatively, if a frame carrying another TID is subsequently received, and the another TID is not mapped to the second link, the state of the second link may alternatively be switched to the single-receive-chain enabled state, so that the receive chain enabled state of the second link can be controlled more flexibly.

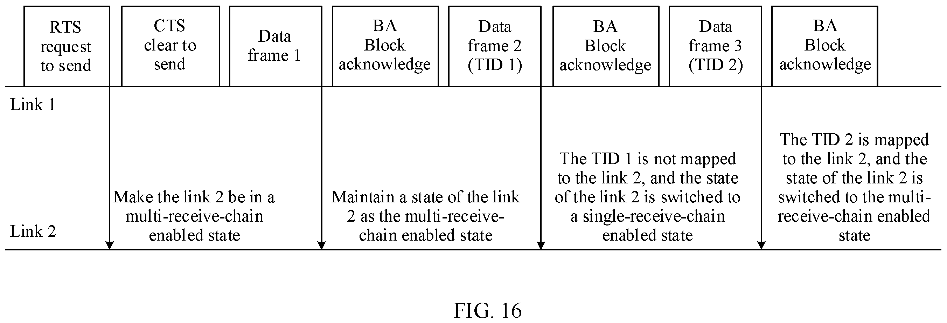

For example, as shown in FIG. 16, the start frame received by the first multi-link device 1 by using the link 1 is an RTS frame. Because the RTS frame does not carry a TID, the first multi-link device 1 makes the link 2 be in the multi-receive-chain enabled state. The first multi-link device 1 subsequently receives, by using the link 1, the data frame 1 sent by the second multi-link device, where the data frame 1 does not carry a TID. The state of the link 1 is maintained as the multi-receive-chain enabled state. The first multi-link device 1 subsequently receives, by using the link 1, the data frame 2 sent by the second multi-link device, where the data frame 2 carries the TID 1. Because the TID 1 is not mapped to the link 2, the first multi-link device switches the state of the link 2 to the single-receive-chain enabled state. The first multi-link device subsequently receives, by using the link 1, the data frame 3 sent by the second multi-link device, where the data frame 3 carries the TID 2. Because the TID 2 is mapped to the link 2, the first multi-link device makes the link 2 be in the multi-receive-chain enabled state.

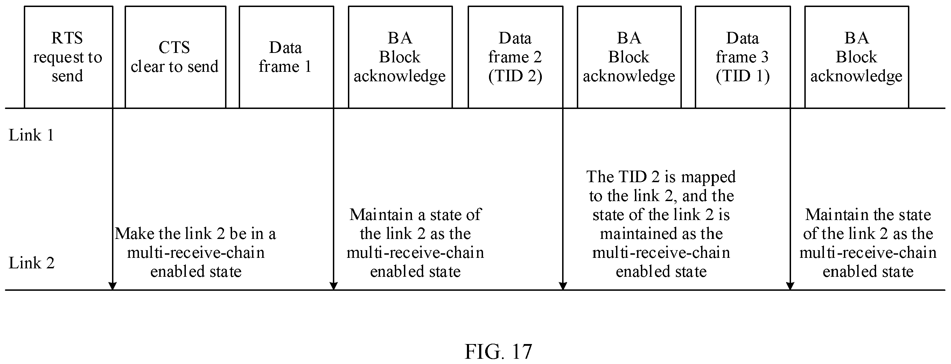

In another example, as shown in FIG. 17, the start frame received by the first multi-link device 1 by using the link 1 is an RTS frame. Because the RTS frame does not carry a TID, the first multi-link device 1 makes the link 2 be in the multi-receive-chain enabled state. The first multi-link device 1 subsequently receives, by using the link 1, the data frame 1 sent by the second multi-link device, where the data frame 1 does not carry a TID. The state of the link 1 is maintained as the multi-receive-chain enabled state. The first multi-link device 1 subsequently receives, by using the link 1, the data frame 2 sent by the second multi-link device, where the data frame 2 carries the TID 2. Because the TID 2 is mapped to the link 2, the first multi-link device maintains the state of the link 2 as the multi-receive-chain enabled state. The first multi-link device further subsequently receives, by using the link 1, the data frame 3 sent by the second multi-link device, where the data frame 3 carries the TID 1. Even if the TID 1 is not mapped to the link 2, the first multi-link device maintains the state of the link 2 as the multi-receive-chain enabled state before the frame interaction sequence of the first multi-link device and the second multi-link device on the link 2 ends.

In summary, immediately switch to the plurality of receive chains on the link 2 after the start frame, and switch back to the single receive chain if the TID carried in the subsequent frame is not mapped to the link 2 (immediately switch to multiple receive chains on link 2 after start frame, and switch back to single receive chain if the TID carried in the following frame is not mapped to link 2). The receive chains may switch back and forth (Receive chains may switch back and forth). Suggest to determine to whether to switch to the single receive chain based on the first frame carrying a TID (suggest to determine whether to switch to single receive chain base on the first frame with a TID). After switch to the plurality of receive chains based on the first piece of data carrying a TID, do not switch to a single receive chain until the frame interaction sequence ends (After switch to multiple receive chains based on the first data with a TID, don't switch to single receive chain until the end of frame exchange sequence). Suggest to first transmit the frame carrying a TID that is mapped to the link 2 (suggest to first transmit the frame with TID that is mapped to link 2). Optionally, the target link may further include a link corresponding to a station in a sleeping state in the first multi-link device. A station in the sleeping state is a station that cannot perform frame interaction with an access point in the second multi-link device.

The following describes in detail determining the second links based on indication information used for indicating the one or more second links:
In a possible implementation, the first frame carries indication information used for indicating the one or more second links, and before the first multi-link device makes the one or more second links be in the multi-receive-chain enabled state, the first multi-link device determines the one or more second links based on the indication information. Based on this possible implementation, the link indicated by the second multi-link device can be made to be in the multi-receive-chain enabled state. This helps reduce power consumption of the first multi-link device.

For example, if the indication information carried in the first frame indicates that the second links are the link 2 and the link 3, after receiving the first frame, the first multi-link device determines that the link 2 and the link 3 are the second links based on the indication information. Then, the first multi-link device makes the link 2 and the link 3 be in the multi-receive-chain enabled state. Optionally, the second link may be specifically a link corresponding to a station in an awake state in a link indicated by the indication information.

The following describes several frame structures of the first frame carrying the indication information:
First frame structure: The first frame is a data frame, the data frame includes a high throughput control (high throughput control, HT control) field of a high efficiency (high efficiency, HE) type, the high throughput control (HT control) field includes an A-control (A-control) subfield, the A-control (A-control) subfield includes a control (control) subfield, the control (control) subfield includes a control information (control information) subfield and a control identifier (control ID) subfield, the control information (control information) subfield carries the indication information, the control identifier (control ID) subfield carries a control identifier, and the control identifier is used for indicating that the control information subfield carries the indication information.

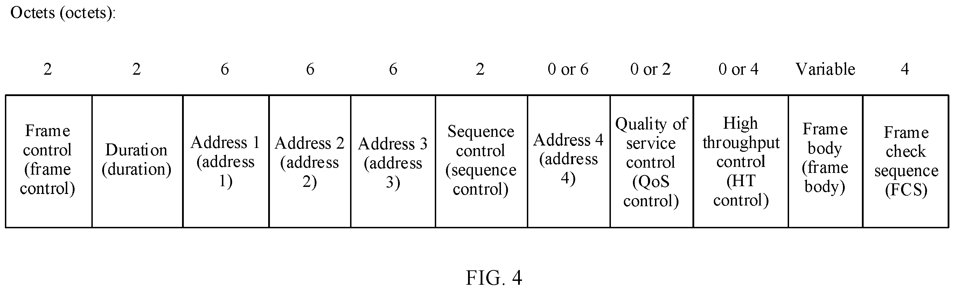

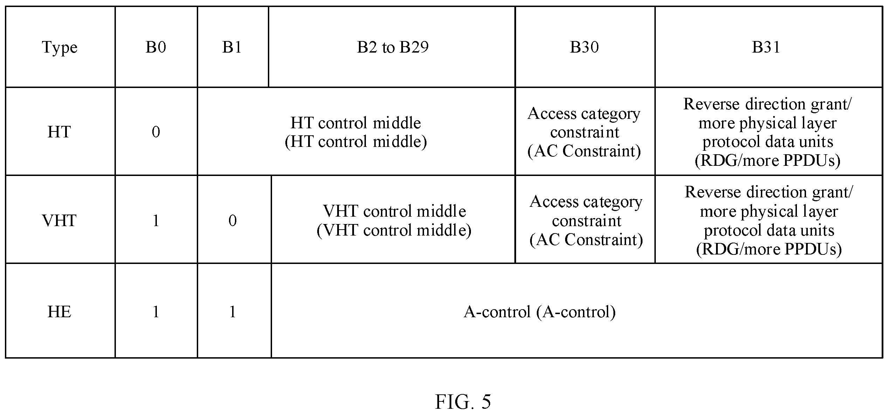

As shown in FIG. 4, in an existing standard protocol, there is a high throughput control (HT control) field in the data frame, and whether the high throughput control field exists is indicated by using a frame control (frame control) field. A length of the high throughput control (HT control) field is 4 bytes. There are three types of high throughput control (HT control) fields, and different types are distinguished by using the first bit (B0) and the second bit (B1) of the high throughput control (HT control) field. As shown in FIG. 5, when B0=0, the corresponding high throughput control (HT control) field is a high throughput control (HT control) field of an HT type; when B0=1 and B1=0, the corresponding high throughput control (HT control) field is a high throughput control (HT control) field of a very high throughput (very high throughput, VHT) type; and when B0=1 and B 1=1, the corresponding high throughput control (HT control) field is a high throughput control (HT control) field of the high efficiency (HE) type.

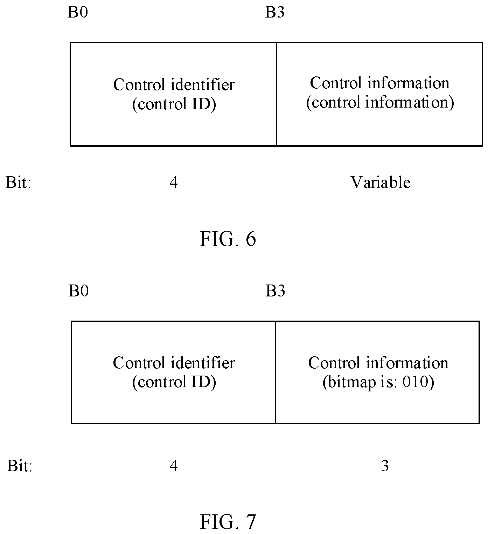

Parts B2 to B31 in the high throughput control (HT control) field of the HE type are referred to as the A-control (A-control) subfield. The A-control (A-control) subfield includes one or more control (control) subfields. As shown in FIG. 6, the control (control) subfield includes a 4-bit control identifier (control ID) subfield, and a control information (control information) subfield with a variable length. In the existing standard, types of the control identifier (control ID) subfield and lengths of the control information (control information) subfield are shown in the following Table 2.

**Table 2**

| Control identifier value (control ID value) | Description | Length of the control information (control information) subfield |
|---|---|---|
| 0 | Triggered response scheduling (triggered response scheduling, TRS) | 26 |
| 1 | Operating mode (operating mode, OM) | 12 |
| 2 | High efficiency link adaptation (HE link adaptation, HLA) | 26 |
| 3 | Buffer status report (buffer status report, BSR) | 26 |
| 4 | Uplink power headroom (UL power headroom, UPH) | 8 |
| 5 | Bandwidth query report (bandwidth query report, BQR) | 10 |
| 6 | Command and status (command and status, CAS) | 8 |
| 7 to 14 | Reserved (reserved) | - |
| 15 | Ones need expansion surely (ones need expansion surely, ONES) | 26 |

Optionally, in the data frame, the control identifier carried in the control identifier (control ID) subfield may be any one of values 7 to 14 in Table 2 that are reserved based on the standard, to indicate that the control information (control information) subfield of the first frame carries the indication information. For example, the control identifier carried in the control identifier subfield may be 7, 8, 9, 10, 11, 12, 13, or 14.

Optionally, the indication information has the following two forms in the control information (control information) subfield:
First form: The indication information indicates the second link in a manner of a bitmap in the control information (control information) subfield. Each bit in the control information (control information) subfield may correspond to one link. When a bit correspond to a link is 1, it indicates that the link is the second link, or when a bit corresponding to a link is 0, it indicates that the link is the second link. In the first manner, a quantity of bits included in the bitmap may be fixed.

For example, when a bit corresponding to a link is 1, it indicates that the link is the second link. As shown in FIG. 7, the control information (control information) subfield includes 3 bits. The first bit corresponds to the link 1, the second bit corresponds to the link 2, and the third bit corresponds to the link 3. If the bitmap in the control information (control information) subfield is 010, the first multi-link device determines that the link 2 is the second link based on the bitmap.

Second form: The indication information performs indication by using a plurality of link identifier (link ID) subfields in the control information (control information) subfield. A quantity of link identifier (link ID) subfields included in the control information (control information) subfield may be fixed or variable.

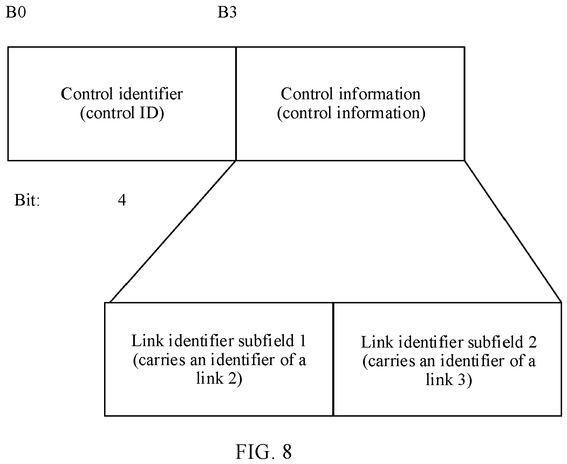

For example, as shown in FIG. 8, the control information (control information) subfield includes two link identifier (link ID) subfields. Each link identifier (link ID) subfield is used for carrying a link identifier. For example, if the link 1 is the first link and the link 2 and the link 3 are the second links, an identifier of the link 2 may be carried in a link identifier (link ID) subfield 1, and an identifier of the link 3 may be carried in a link identifier (link ID) subfield 2. Optionally, if a quantity of the second links is less than that of the link identifier (link ID) subfields, a repeated link identifier may be carried in a redundant link identifier (link ID) subfield. For example, if only the link 2 is the second link, the link identifier (link ID) subfield 1 and the link identifier (link ID) subfield 2 may carry a same link identifier, namely, the identifier of the link 2. Alternatively, the redundant link identifier subfield may be indicated as a special link identifier, for example, a link identifier of the first link.

Optionally, if the quantity of the link identifier (link ID) subfields is large, the link identifier (link ID) subfields may alternatively be carried by using control information (control information) subfields in a plurality of control (control) subfields.

The data frame of the first frame structure is a data frame of an existing type. The indication information is carried by using this data frame structure without additional signaling overheads, and a new frame type does not need to be added. Second frame structure: The first frame is a control frame, and the indication information is carried in the following one or more subfields in a frame control (frame control) field of the control frame: a to distributed system (to DS) subfield, a from distributed system (from DS) subfield, a more fragment (more frag) subfield, a retry (retry) subfield, a protected frame (protected frame) subfield, or a +high throughput control/order (+HTC/order) subfield.

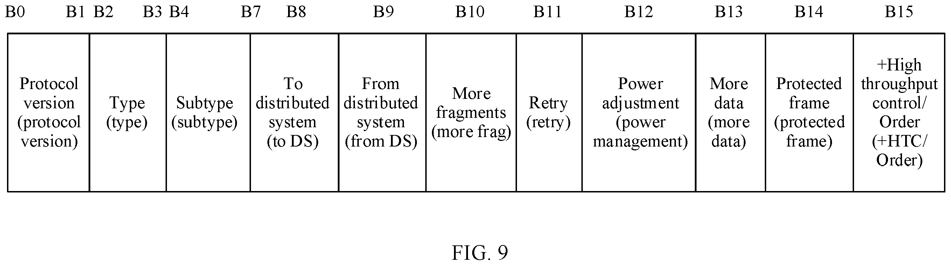

For example, subfields included in the frame control field of the control frame may be shown in FIG. 9. Optionally, the control frame may be any one of the following: a request to send (request to send, RTS) frame, a clear to send (clear to send, CTS) frame, an acknowledge (acknowledge, Ack) frame, a block acknowledge (block ACK, BA) frame, a trigger (trigger) frame, a poll frame (poll frame), a grant frame (grant frame), a contention free end (contention free end, CF-End) frame, and the like.

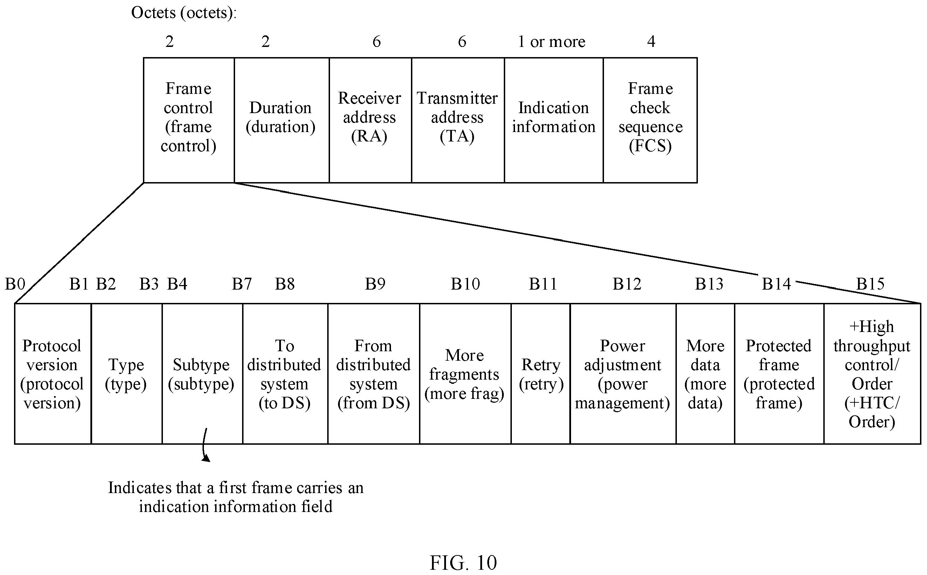

The second link is indicated by using a reserved field in an existing control frame without additional signaling overheads. A new frame type does not need to be added. A plurality of control frames may be used for this function. Third frame structure: The first frame is a control frame of a new type. As shown in FIG. 10, a frame control (frame control) field of the control frame includes a subtype (subtype) subfield, the subtype subfield is used for indicating that the control frame carries an indication information field, and the indication information field carries the indication information. The indication information field may alternatively be referred to as another name. This is not limited in this embodiment of this application.

A type (type) subfield in the frame control (frame control) field is used for indicating whether a frame in which the type subfield is located is a control frame or a data frame. In this embodiment of this application, the type (type) subfield is used for indicating that the frame in which the type subfield is located is a control frame. When the type (type) subfield indicates that the frame in which the type subfield is located is a control frame, the subtype (subtype) subfield in the frame control (frame control) field is used for indicating a specific control frame in which the subtype subfield is located. In this embodiment of this application, the subtype (subtype) subfield is used for indicating that the frame in which the subtype subfield is located is a new control frame. The frame carries an indication information field, and the indication information field carries the indication information.

Optionally, that the control frame carries the indication information field may be indicated by using a reserved value of the subtype (subtype) subfield in the existing standard. For example, the value of the subtype (subtype) subfield may be any one of 0000, 0001, and 1111.

The indication information is carried by using the control frame of the new type, so that the indication information can be carried more flexibly.

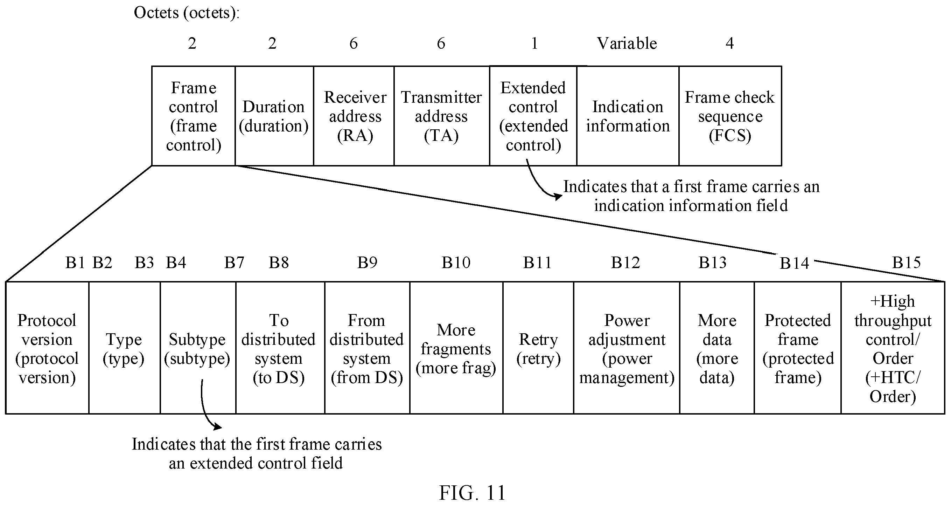

Fourth frame structure: An implementation form of the first frame is still a control frame of a new type. As shown in FIG. 11, a frame control (frame control) field of the control frame includes a subtype (subtype) subfield, the subtype (subtype) subfield is used for indicating that the control frame carries an extended control (extended control) field, the extended control (extended control) field is used for indicating that the control frame carries an indication information field, and the indication information field carries the indication information. The extended control (extended control) field and the indication information field may alternatively be referred to as other names. This is not limited in this embodiment of this application.

Optionally, that the control frame carries the extended control (extended control) field may be indicated by using a reserved value of the subtype (subtype) subfield in the existing standard. For example, the value of the subtype (subtype) subfield may be any one of 0000, 0001, and 1111.

Because a quantity of reserved values of the subtype (subtype) subfield is small at present, only a small quantity of types of control frames can be indicated. There may be many available values of the extended control (extended control) field. Therefore, the subtype (subtype) subfield is combined with the extended control (extended control) field, to indicate that the control frame carries the indication information field, so that more types of control frames can be indicated.

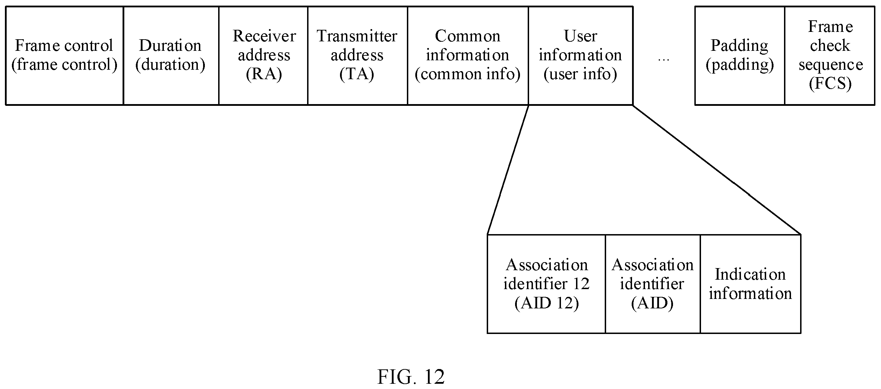

Fifth frame structure: The first frame is a trigger frame. As shown in FIG. 12, a user information (user info) field of the trigger frame includes an association identifier (AID) 12 subfield, an association identifier (AID) subfield, and an indication information subfield, the association identifier (AID) 12 subfield is set to a specific value for indicating that the user information (user info) field carries the association identifier (AID) subfield and the indication information subfield, the association identifier (AID) subfield carries an identifier of a receiver, and the indication information subfield carries the indication information. The indication information field may alternatively be referred to as another name. This is not limited in this embodiment of this application.

The AID 12 subfield includes 12 bits. Optionally, the AID 12 subfield may indicate, by using any value in 2044 to 2047 reserved based on the standard, that the user information field carries the AID subfield and the indication information subfield. The trigger frame may be of a new frame type, or may be of an existing frame type. This is because even if the trigger frame is an existing trigger frame, if a legacy (legacy) station cannot understand the user information (user info) field of AID 12=2044, the legacy station ignores the user information (user info) field.

The indication information is carried by using the trigger frame without additional signaling overheads, and a new frame type does not need to be added. In addition, in a process of multiplexing a frame of an existing type, a legacy station (namely, a station supporting a last-generation 802.11ax standard or supporting a standard before 802.11ax) can be prevented from affecting deciphering of the frame.

In the second frame structure to the fifth frame structure, refer to the description of the first frame structure for a form of indicating the second link by the indication information. To be specific, indication may be performed by using a bitmap or adding a link identifier subfield. Details are not described herein again.

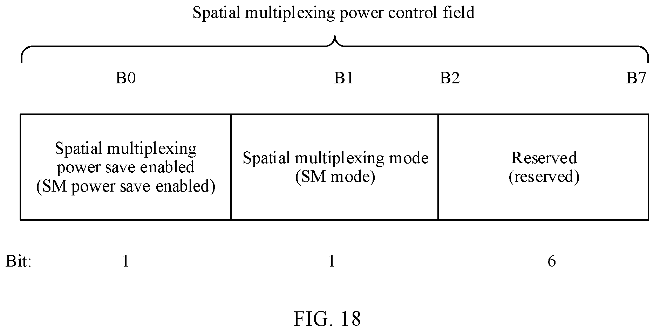

An embodiment of this application further provides a receive chain enabled state switching method applicable to a static spatial multiplexing power save mechanism. A station supporting the static spatial multiplexing power save mechanism communicates with an access point for a spatial multiplexing power save state of the station by using a spatial multiplexing power save (SM power save) frame, or a spatial multiplexing power save subfield in an HT capability element. FIG. 18 shows a structure of a spatial multiplexing power control (SM power control) field in the spatial multiplexing power save frame in an existing standard. A spatial multiplexing power save enabled subfield is 1 bit. When the spatial multiplexing power save enabled subfield is set to 1, it indicates that spatial multiplexing power save is enabled, and when the spatial multiplexing power save enabled subfield is set to 0, it indicates that spatial multiplexing power save is disabled. A spatial multiplexing mode (SM mode) subfield is 1 bit. When the spatial multiplexing mode subfield is set to 1, it represents a dynamic spatial multiplexing power save mode, and when the spatial multiplexing mode subfield is set to 0, it represents a static spatial multiplexing power save mode. After the station receives a response frame sent by the access point for the spatial multiplexing power save frame, the station switches to a receive chain enabled state corresponding to the spatial multiplexing power save state.

The following describes in detail the receive chain enabled state switching method applicable to the static spatial multiplexing power save mechanism provided in this embodiment of this application:

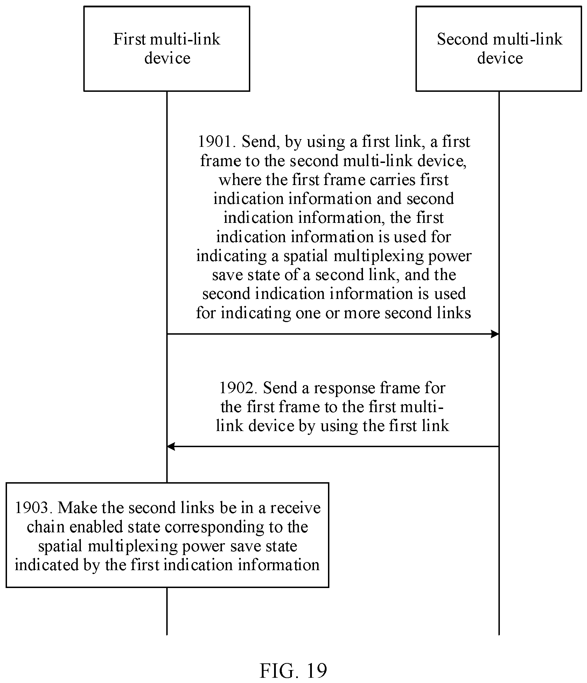

FIG. 19 is a schematic flowchart of a receive chain enabled state switching method according to an embodiment of this application. The receive chain enabled state switching method is applicable to a static spatial multiplexing power save mechanism. As shown in FIG. 19, the receive chain enabled state switching method includes the following steps 1901 to 1903. The method shown in FIG. 19 may be executed by a first multi-link device and a second multi-link device. Alternatively, the method shown in FIG. 19 may be executed by a chip in the first multi-link device and a chip in the second multi-link device. FIG. 19 is described by using an example in which the first multi-link device and the second multi-link device execute the method.

1901. The first multi-link device sends, by using a first link, a first frame to a second multi-link device, where the first frame carries first indication information and second indication information, the first indication information is used for indicating a spatial multiplexing power save state of a second link, the second indication information is used for indicating one or more second links, and the second link is a link that is between the first multi-link device and the second multi-link device and that is different from the first link.

A value of the first indication information may be 1 or 0. When the value of the first indication information is 1, it indicates that the spatial multiplexing power save state is a spatial multiplexing power save enabled state. When the spatial multiplexing power save state is the spatial multiplexing power save enabled state, the spatial multiplexing power save state corresponds to a single-receive-chain enabled state. When the value of the first indication information is 0, it indicates that the spatial multiplexing power save state is a spatial multiplexing power save disabled state. When the spatial multiplexing power save state is the spatial multiplexing power save disabled state, the spatial multiplexing power save state corresponds to a multi-receive-chain enabled state. Alternatively, when the value of the first indication information is 0, it may indicate that the spatial multiplexing power save state is the spatial multiplexing power save enabled state. When the value of the first indication information is 1, it indicates that the spatial multiplexing power save state is the spatial multiplexing power save disabled state. In this embodiment of this application, the spatial multiplexing power save state indicated by the first indication information may be the multi-receive-chain enabled state, or the single-receive-chain enabled state.

The second indication information may indicate one or more second links. The second link is a link that is between the first multi-link device and the second multi-link device and that is different from the first link. For the description of the second link, refer to the description in the embodiment corresponding to FIG. 3, and details are not described herein again.

In a possible implementation, the first frame may further include third indication information, where the third indication information is used for indicating a spatial multiplexing mode (SM mode) of the first multi-link device. The spatial multiplexing mode includes a dynamic spatial multiplexing power save mode and a static spatial multiplexing power save mode. When a value of the third indication information is 1, it indicates that the first multi-link device is in the dynamic spatial multiplexing power save mode. When the value of the third indication information is 0, it indicates that the first multi-link device is in the static spatial multiplexing power save mode. Alternatively, when the value of the third indication information is 0, it may indicate that the first multi-link device is in the dynamic spatial multiplexing power save mode. When the value of the third indication information is 1, it indicates that the first multi-link device is in the static spatial multiplexing power save mode. In this embodiment of this application, the third indication information is used for indicating that the spatial multiplexing mode of the first multi-link device is the static spatial multiplexing power save mode.

1902. The second multi-link device sends a response frame for the first frame to the first multi-link device by using the first link.

In this embodiment of this application, after receiving, by using the first link, the first frame sent by the first multi-link device, the second multi-link device sends the response frame for the first frame to the first multi-link device by using the first link.

1903. The first multi-link device makes the one or more second links be in the receive chain enabled state corresponding to the spatial multiplexing power save state indicated by the first indication information.

In this embodiment of this application, after receiving, by using the first link, the response frame sent by the second multi-link device for the first frame, the first multi-link device makes the second link be in the receive chain enabled state corresponding to the spatial multiplexing power save state indicated by the first indication information.

In this embodiment of this application, it is assumed that the spatial multiplexing power save state indicated by the first indication information corresponds to the multi-receive-chain enabled state. Before the first multi-link device sends the first frame, because one receive chain is already enabled on the second link, the second link can be made to be in the multi-receive-chain enabled state only by enabling at least one another receive chain of the second link.

In the method described in FIG. 19, when the first multi-link device is in the static spatial multiplexing power save mode, it is possible that the first multi-link device first obtains a TXOP on the first link and then obtains a TXOP on the second link. After obtaining the TXOP on the first link, the first multi-link device sends the first frame by using the first link, so that the second link is made to in the multi-receive-chain enabled state. In this way, after the first multi-link device and the second multi-link device obtain the TXOPs on the second link, the second multi-link device can directly perform data transmission with the first multi-link device on the second link by using a plurality of spatial flows. It can be learned that, by implementing the method described in FIG. 19, the second multi-link device can perform data transmission with the first multi-link device on the second link in a timely manner by using a plurality of spatial flows.

In a possible implementation, after receiving, by using the first link, the response frame sent by the second multi-link device for the first frame, the first multi-link device further makes the first link be in the receive chain enabled state corresponding to the spatial multiplexing power save state indicated by the first indication information.

After the first multi-link device receives the response frame for the first frame, the first multi-link device may simultaneously make the first link and the one or more second links be in the receive chain enabled state corresponding to the spatial multiplexing power save state indicated by the first indication information. Alternatively, after receiving the response frame for the first frame, the first multi-link device first makes the first link be in the receive chain enabled state corresponding to the spatial multiplexing power save state indicated by the first indication information, and then makes the one or more second links be in the receive chain enabled state corresponding to the spatial multiplexing power save state indicated by the first indication information. A time difference between the two links in enabling the receive chain enabled state corresponding to the spatial multiplexing power save state indicated by the first indication information is a delay caused by signal interaction between the first link and the second link. Based on this possible implementation, even if the first multi-link device does not support simultaneous transmit and receive (simultaneous transmit and receive, STR), the first multi-link device can make, in a timely manner, the second link be in the receive chain enabled state corresponding to the spatial multiplexing power save state indicated by the first indication information.

In a possible implementation, if the second indication information is further used for indicating the first link, after receiving, by using the first link, the response frame sent by the second multi-link device for the first frame, the first multi-link device may further make the first link be in the receive chain enabled state corresponding to the spatial multiplexing power save state indicated by the first indication information. If the second indication information does not indicate the first link, after the first multi-link device receives, by using the first link, the response frame sent by the second multi-link device for the first frame, the first multi-link device maintains the current receive chain enabled state of the first link. Based on this possible implementation, only when the second indication information indicates the first link, the first link can be made to be in the receive chain enabled state corresponding to the spatial multiplexing power save state indicated by the first indication information, so that the receive chain enabled state of the first link can be switched more flexibly.

In a possible implementation, the first frame is a spatial multiplexing power save frame. The first frame includes a spatial multiplexing power control (SM power control) field, where the spatial multiplexing power control (SM power control) field carries the first indication information and the second indication information. In this possible implementation, the first indication information and the second indication information may be carried in any position of the spatial multiplexing power control (SM power control) field. Based on this possible implementation, the first indication information and the second indication information can be carried by using a field of an existing type without additional signaling overheads, and a new frame type does not need to be added.

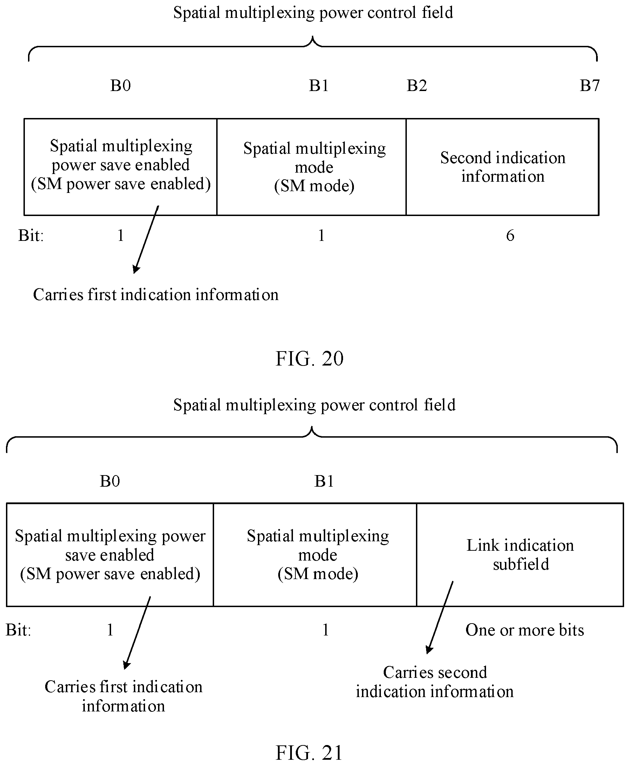

In a possible implementation, as shown in FIG. 20, the spatial multiplexing power control (SM power control) field includes a spatial multiplexing power save enabled (SM power save enabled) subfield. The first indication information is carried in the spatial multiplexing power save enabled (SM power save enabled) subfield. The second indication information is carried in the third bit (B2) to the seventh bit (B7) of the spatial multiplexing power control (SM power control) field. Based on this possible implementation, when the first indication information is carried in the spatial multiplexing power save enabled (SM power save enabled) subfield, a modification to an existing standard is small, and it is easier to carry the second indication information by using reserved bits in the spatial multiplexing power control (SM power control) field.

In a possible implementation, as shown in FIG. 21, the spatial multiplexing power control (SM power control) field includes a spatial multiplexing power save enabled (SM power save enabled) subfield and a link indication subfield. The first indication information is carried in the spatial multiplexing power save enabled (SM power save enabled) subfield. The second indication information is carried in the link indication subfield. The link indication subfield may be one or more bits. A position of the link indication subfield is not necessarily in the third bit (B2) to the seventh bit (B7). Based on this possible implementation, when the first indication information is carried in the spatial multiplexing power save enabled (SM power save enabled) subfield, a modification to an existing standard is small, and it is more flexible to carry the second indication information by using the link indication subfield in the spatial multiplexing power control (SM power control) field.

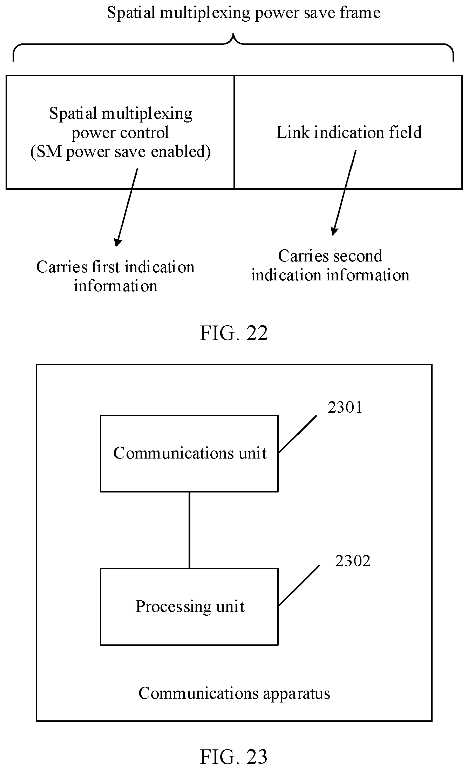

In a possible implementation, as shown in FIG. 22, the first frame is a spatial multiplexing power save frame. The first frame includes a spatial multiplexing power control (SM power control) field and a link indication field, where the first indication information is carried in the spatial multiplexing power control (SM power control) field, and the second indication information is carried in the link indication field. Based on this possible implementation, when the first indication information is carried in the spatial multiplexing power control (SM power control) field, a modification to an existing standard is small, and it is more flexible to carry the second indication information by using the link indication field in the spatial multiplexing power save frame.

In a possible implementation, the first indication information and the second indication information may alternatively be carried in a spatial multiplexing power save (SM power save) subfield of an HT capability element.

In a possible implementation, the second indication information may indicate the second link by using a bitmap or a link identifier subfield. Refer to the description in the foregoing embodiment for a specific implementation, and details are not described herein again.

FIG. 23 is a schematic diagram of a structure of a communications apparatus according to an embodiment of this application. The communications apparatus shown in FIG. 23 may be configured to perform some or all functions of the first multi-link device in the method embodiment described in FIG. 3. The apparatus may be a first multi-link device, or an apparatus in the first multi-link device, or an apparatus that can be used with the first multi-link device. The communications apparatus may alternatively be a chip system. The communications apparatus shown in FIG. 23 may include a communications unit 2301 and a processing unit 2302. The communications unit may alternatively be referred to as a transceiver unit, or the communications unit includes a receiving unit and a sending unit. The processing unit 2302 is configured to perform data processing.

The communications unit 2301 is configured to receive, by using a first link, a first frame sent by a second multi-link device to the first multi-link device. The processing unit 2302 is configured to make one or more second links be in a multi-receive-chain enabled state, where the second link is a link that is between the first multi-link device and the second multi-link device and that is different from the first link.

In a possible implementation, the communications unit 2301 is further configured to perform frame interaction with the second multi-link device by using the second link after the processing unit 2302 makes the one or more second links be in the multi-receive-chain enabled state, and the processing unit 2302 is further configured to switch the state of the second link to a single-receive-chain enabled state when a frame interaction sequence on the second link ends. Alternatively, the processing unit 2302 is further configured to switch the state of the second link to a single-receive-chain enabled state when the communications unit 2301 does not receive, by using the second link within predetermined time, any frame sent by the second multi-link device to the first multi-link device after the processing unit 2302 makes the one or more second links be in the multi-receive-chain enabled state.

Alternatively, the communications unit 2301 is further configured to receive, by using the second link, a second frame sent by the second multi-link device, where the second frame is used for indicating to switch the state of the second link to a single-receive-chain enabled state; and the processing unit 2302 is further configured to switch the state of the second link to the single-receive-chain enabled state.

In a possible implementation, the first multi-link device has a plurality of stations, and the second link is a link corresponding to a station in an awake state in the first multi-link device.

In a possible implementation, the first frame carries a traffic identifier (TID), and the second link is a link mapped to the TID.

In a possible implementation, the communications unit 2301 is further configured to receive, by using the first link, a third frame sent by the second multi-link device to the first multi-link device after the processing unit 2302 makes the one or more second links be in the multi-receive-chain enabled state, where the third frame includes a traffic identifier (TID); and the processing unit 2302 is further configured to switch a state of a target link in the one or more second links to the single-receive-chain enabled state, where the target link is a link not mapped to the TID in the one or more second links.

In a possible implementation, the first frame carries indication information used for indicating the one or more second links.

The processing unit 2302 is further configured to determine the one or more second links based on the indication information before making the one or more second links be in the multi-receive-chain enabled state.

In a possible implementation, the first frame is a data frame, the first frame includes a high throughput control (HT control) field of a high efficiency (HE) type, the high throughput control field includes an A-control (A-control) subfield, the A-control subfield includes a control (control) subfield, the control subfield includes a control information (control information) subfield and a control identifier (control ID) subfield, the control information subfield carries the indication information, the control identifier subfield carries a control identifier, and the control identifier is used for indicating that the control information subfield carries the indication information.

In a possible implementation, the first frame is a control frame, and the indication information is carried in the following one or more subfields in a frame control (frame control) field of the first frame: a to distributed system (to DS) subfield, a from distributed system (from DS) subfield, a more fragment (more frag) subfield, a retry (retry) subfield, a protected frame (protected frame) subfield, or a +high throughput control/order (+HTC/order) subfield. In a possible implementation, the first frame is a control frame, a frame control (frame control) field of the first frame includes a subtype (subtype) subfield, the subtype subfield is used for indicating that the first frame carries an indication information field, and the indication information field carries the indication information.

Alternatively, a frame control (frame control) field of the first frame includes a subtype (subtype) subfield, the subtype subfield is used for indicating that the first frame carries an extended control (extended control) field, the extended control field is used for indicating that the first frame carries an indication information field, and the indication information field carries the indication information.

In a possible implementation, the first frame is a trigger frame, a user information (user info) field of the first frame includes an association identifier AID 12 subfield, an AID subfield, and an indication information subfield, the AID 12 subfield is set to a specific value for indicating that the user information field carries the AID subfield and the indication information subfield, the AID subfield carries an identifier of a receiver, and the indication information subfield carries the indication information.

FIG. 23 is a schematic diagram of a structure of a communications apparatus according to an embodiment of this application. The communications apparatus shown in FIG. 23 may be configured to perform some or all functions of the first multi-link device in the method embodiment described in FIG. 19. The apparatus may be a first multi-link device, or an apparatus in the first multi-link device, or an apparatus that can be used matching the first multi-link device. The communications apparatus may alternatively be a chip system. The communications apparatus shown in FIG. 23 may include a communications unit 2301 and a processing unit 2302. The communications unit may alternatively be referred to as a transceiver unit, or the communications unit 2301 includes a receiving unit and a sending unit. The processing unit 2302 is configured to perform data processing.

The communications unit 2301 is configured to send a first frame to a second multi-link device by using a first link, where the first frame carries first indication information and second indication information, the first indication information is used for indicating a spatial multiplexing power save state of a second link, the second indication information is used for indicating one or more second links, and the second link is a link that is between the first multi-link device and the second multi-link device and that is different from the first link. The communications unit 2301 is further configured to receive, by using the first link, a response frame sent by the second multi-link device for the first frame. The processing unit 2302 is configured to make the one or more second links be in a receive chain enabled state corresponding to the spatial multiplexing power save state indicated by the first indication information.

In a possible implementation, the processing unit 2302 is further configured to make the first link be in the receive chain enabled state corresponding to the spatial multiplexing power save state indicated by the first indication information after the communications unit 2301 receives, by using the first link, the response frame sent by the second multi-link device for the first frame.

In a possible implementation, the processing unit 2302 is further configured to make the first link be in the receive chain enabled state corresponding to the spatial multiplexing power save state indicated by the first indication information if the second indication information is further used to indicate the first link after the communications unit 2301 receives, by using the first link, the response frame sent by the second multi-link device for the first frame.

In a possible implementation, the first frame is a spatial multiplexing power save frame. The first frame includes a spatial multiplexing power control (SM power control) field, where the spatial multiplexing power control (SM power control) field carries the first indication information and the second indication information.

In a possible implementation, the spatial multiplexing power control (SM power control) field includes a spatial multiplexing power save enabled (SM power save enabled) subfield. The first indication information is carried in the spatial multiplexing power save enabled (SM power save enabled) subfield. The second indication information is carried in the third bit (B2) to the seventh bit (B7) of the spatial multiplexing power control (SM power control) field. In a possible implementation, the spatial multiplexing power control (SM power control) field includes a spatial multiplexing power save enabled (SM power save enabled) subfield and a link indication subfield. The first indication information is carried in the spatial multiplexing power save enabled (SM power save enabled) subfield. The second indication information is carried in the link indication subfield.

In a possible implementation, the first frame is a spatial multiplexing power save frame. The first frame includes a spatial multiplexing power control (SM power control) field and a link indication field, where the first indication information is carried in the spatial multiplexing power control (SM power control) field, and the second indication information is carried in the link indication field.

FIG. 23 is a schematic diagram of a structure of a communications apparatus according to an embodiment of this application. The communications apparatus shown in FIG. 23 may be configured to perform some or all functions of the second multi-link device in the method embodiment described in FIG. 3. The apparatus may be a second multi-link device, or an apparatus in the second multi-link device, or an apparatus that can be used with the second multi-link device. The communications apparatus may alternatively be a chip system. The communications apparatus shown in FIG. 23 may include a communications unit 2301 and a processing unit 2302. The communications unit may alternatively be referred to as a transceiver unit, or the communications unit includes a receiving unit and a sending unit. The processing unit 2302 is configured to perform data processing.

The communications unit 2301 is configured to receive, by using a first link, a first frame sent by a first multi-link device, where the first frame carries first indication information and second indication information, the first indication information is used for indicating a spatial multiplexing power save state of a second link, the second indication information is used for indicating one or more second links, and the second link is a link that is between the first multi-link device and the second multi-link device and that is different from the first link. The communications unit 2301 is further configured to send, by using the first link, a response frame for the first frame to the first multi-link device.

In a possible implementation, the second indication information is further used for indicating the first link.

In a possible implementation, the first frame is a spatial multiplexing power save frame. The first frame includes a spatial multiplexing power control (SM power control) field, where the spatial multiplexing power control (SM power control) field carries the first indication information and the second indication information.

In a possible implementation, the spatial multiplexing power control (SM power control) field includes a spatial multiplexing power save enabled (SM power save enabled) subfield. The first indication information is carried in the spatial multiplexing power save enabled (SM power save enabled) subfield. The second indication information is carried in the third bit (B2) to the seventh bit (B7) of the spatial multiplexing power control (SM power control) field. In a possible implementation, the spatial multiplexing power control (SM power control) field includes a spatial multiplexing power save enabled (SM power save enabled) subfield and a link indication subfield. The first indication information is carried in the spatial multiplexing power save enabled (SM power save enabled) subfield. The second indication information is carried in the link indication subfield.

In a possible implementation, the first frame is a spatial multiplexing power save frame. The first frame includes a spatial multiplexing power control (SM power control) field and a link indication field, where the first indication information is carried in the spatial multiplexing power control (SM power control) field, and the second indication information is carried in the link indication field.

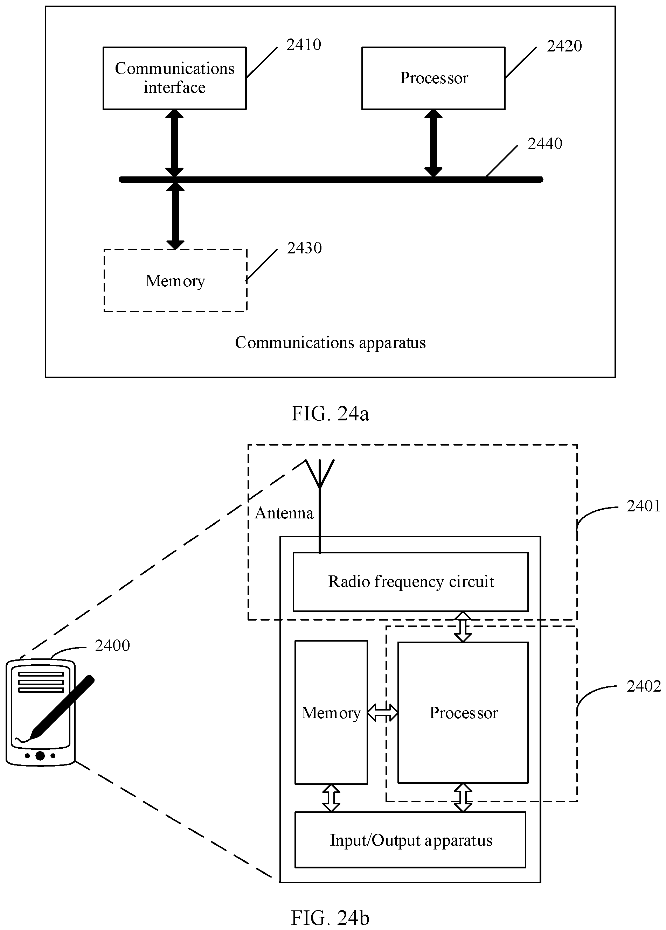

FIG. 24a shows a communications apparatus 240 according to an embodiment of this application, and the communications apparatus 240 is configured to implement functions of the first multi-link device or the second multi-link device in the method embodiment described in FIG. 3 or FIG. 19. The communications apparatus 240 may be the first multi-link device or the second multi-link device. Alternatively, the communications apparatus 240 may be an apparatus used for the first multi-link device. The apparatus used for the first multi-link device may be a chip system or a chip in the first multi-link device. Alternatively, the communications apparatus 240 may be an apparatus used for the second multi-link device. The apparatus used for the second multi-link device may be a chip system or a chip in the second multi-link device. The chip system may include a chip, or may include a chip and another discrete component.

The communications apparatus 240 includes at least one processor 2420, configured to implement a data processing function of the first multi-link device or the second multi-link device of this application.

The apparatus 240 may further include a communications interface 2410, configured to implement a transceiving operation of the first multi-link device. In this embodiment of this application, the communications interface may be a transceiver, a circuit, a bus, a module, or a communications interface of another type, and is configured to communicate with another device through a transmission medium. For example, the communications interface 2410 is used by an apparatus in the apparatus 240 to communicate with the another device. The processor 2420 receives and sends data through the communications interface 2410, and is configured to implement the method in the foregoing method embodiments.

The apparatus 240 may further include at least one memory 2430, configured to store program instructions and/or data. The memory 2430 is coupled to the processor 2420. Coupling in this embodiment of this application may be indirect coupling or a communication connection between apparatuses, units, or modules in an electrical form, a mechanical form, or another form, and is used for information exchange between the apparatuses, the units, or the modules. The processor 2420 may collaborate with the memory 2430. The processor 2420 may execute the program instructions stored in the memory 2430. At least one of the at least one memory may be included in the processor.

In this embodiment of this application, a specific connection medium between the communications interface 2410, the processor 2420, and the memory 2430 is not limited. In this embodiment of this application, the memory 2430, the processor 2420, and the communications interface 2410 are connected through a bus 2440 in FIG. 24a. The bus is represented by using a thick line in FIG. 24a. Such a manner of connection between components is merely an example for description, and imposes no limitation. The bus may be classified into an address bus, a data bus, a control bus, and the like. For ease of representation, only one thick line is used to represent the bus in FIG. 24a, but this does not mean that there is only one bus or only one type of bus.

When the apparatus 240 is specifically an apparatus used for the first multi-link device or the second multi-link device, for example, when the apparatus 240 is specifically a chip or a chip system, the communications interface 2410 may output or receive a baseband signal. When the apparatus 240 is specifically the first multi-link device or the second multi-link device, the communications interface 2410 may output or receive a radio frequency signal. In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor, any conventional processor, or the like. The steps of the method disclosed in the embodiments of this application may be directly presented as being performed and completed by a hardware processor, or performed and completed by a combination of hardware and a software module in the processor.

For example, FIG. 24b is a schematic diagram of a structure of another communications apparatus 2400 according to an embodiment of this application. The apparatus may be a first multi-link device or a second multi-link device. The communications apparatus may perform operations of the first multi-link device or the second multi-link device in the method embodiment described in FIG. 3 or FIG. 19.

For ease of description, FIG. 24b shows only main components of the communication apparatus. As shown in FIG. 24b, the communications apparatus 2400 includes a processor, a memory, a radio frequency circuit, an antenna, and an input/output apparatus. The processor is mainly configured to: process a communication protocol and communication data, and control an entire station, execute a software program, and process data of the software program. For example, the processor is configured to support the communications apparatus in performing operations performed by the first multi-link device or the second multi-link device in a flow described in FIG. 3 or FIG. 19. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The terminal device 2400 may further include the input/output apparatus, such as a touchscreen, a display screen, or a keyboard, and is mainly configured to receive data entered by a user and output data to the user. It should be noted that some types of stations may not have an input/output apparatus.

After the station is powered on, the processor may read the software program in a storage unit, parse and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal, the radio frequency circuit receives the radio frequency signal through the antenna, converts the radio frequency signal into a baseband signal, and outputs the baseband signal to the processor. The processor converts the baseband signal into data and processes the data.

A person skilled in the art may understand that for ease of description, FIG. 24b shows only one memory and one processor. An actual station may include a plurality of processors and memories. The memory may also be referred to as a storage medium, a storage device, or the like. This is not limited in the embodiments of this application.

In an optional implementation, the processor may include a baseband processor and a central processing unit (central processing unit, CPU). The baseband processor is mainly configured to process a communication protocol and communication data. The CPU is mainly configured to: control the entire station, execute a software program, and process data of the software program. Optionally, the processor may alternatively be a network processor (network processor, NP) or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory may include a volatile memory (volatile memory), for example, a random-access memory (random-access memory, RAM). The memory may also include a nonvolatile memory (non-volatile memory), for example, a flash memory (flash memory), a hard disk drive (hard disk drive, HDD), or a solid-state drive (solid-state drive, SSD). The memory may further include a combination of the foregoing types of memories.

For example, in this embodiment of this application, as shown in FIG. 24b, an antenna and a radio frequency circuit that have a transceiving function may be considered as a communications unit 2401 of a station 2400, and a processor with a processing function may be considered as a processing unit 2402 of the station 2400.

The communications unit 2401 may alternatively be referred to as a transceiver, a receiver-transmitter, a transceiver apparatus, a transceiver unit, or the like, and is configured to implement a transceiving function. Optionally, a component that is in the communication unit 2401 and that is configured to implement the receiving function may be considered as a receiving unit, and a component that is in the communication unit 2401 and that is configured to implement the sending function may be considered as a sending unit. In other words, the communication unit 2401 includes the receiving unit and the sending unit. For example, the receiving unit may also be referred to as a receiver, a receiver device, a receiving circuit, or the like, and the sending unit may be referred to as a transmitter, a transmitter device, a transmitting circuit, or the like.

In some embodiments, the communications unit 2401 and the processing unit 2402 may be integrated into one device, or may be separated as different devices. In addition, the processor and the memory may be integrated into one device, or may be separated as different devices.

The communications unit 2401 may be configured to perform the transceiving operation of the first multi-link device or the second multi-link device in the foregoing method embodiments. The processing unit 2402 may be configured to perform the data processing operation of the first multi-link device or the second multi-link device in the foregoing method embodiments.

An embodiment of this application further provides a computer-readable storage medium. The computer-readable storage medium stores instructions. When run on a processor, the instructions are used for performing the method performed by the first multi-link device or the second multi-link device in the foregoing method embodiments.

An embodiment of this application further provides a computer program product. When run on a processor, the computer program product is used for performing the method performed by the first multi-link device or the second multi-link device in the foregoing method embodiments.

Based on a same inventive idea, a problem-resolving principle of the apparatus provided in this embodiment of this application is similar to that of the method embodiments of this application. Therefore, for implementation of the apparatus, refer to the implementation of the methods. For brevity of description, details are not described herein again. It should be noted that for ease of brief description, the foregoing method embodiments are represented as a series of actions. However, a person skilled in the art should appreciate that this application is not limited to the described order of the actions, because according to this application, some steps may be performed in other orders or simultaneously. It should be further appreciated by the persons skilled in the art that the embodiments described in this specification all belong to preferred embodiments, and the involved actions and modules are not necessarily required in this application.

For descriptions of the embodiments provided in this application, reference may be made to each other, and descriptions of the embodiments have different focuses. For a part that is not described in detail in an embodiment, refer to related descriptions of another embodiment. For ease and brevity of description, for example, for functions and performed steps of the apparatuses and devices provided in the embodiments of this application, refer to related descriptions of the method embodiments of this application. The method embodiments and the apparatus embodiments may also be referenced, combined, or cited to each other.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of this application.

## Claims

1. A receive chain enabled state switching method, comprising:
receiving, by a first multi-link device by using a first link, a first frame sent by a second multi-link device to the first multi-link device; and
making, by the first multi-link device, one or more second links be in a multi-receive-chain enabled state, wherein the second link is a link that is between the first multi-link device and the second multi-link device and that is different from the first link.

2. The method according to claim 1, wherein after the receiving, by a first multi-link device by using a first link, a first frame sent by a second multi-link device, the method further comprises:
making, by the first multi-link device, the first link be in the multi-receive-chain enabled state.

3. The method according to claim 1 or 2, wherein after the making, by the first multi-link device, one or more second links be in a multi-receive-chain enabled state, the method further comprises:
performing, by the first multi-link device, frame interaction with the second multi-link device by using the second link, and switching, by the first multi-link device, the state of the second link to a single-receive-chain enabled state when a frame interaction sequence on the second link ends, or
switching, by the first multi-link device, the state of the second link to a single-receive-chain enabled state when the first multi-link device does not receive, by using the second link within predetermined time, any frame sent by the second multi-link device to the first multi-link device; or
switching, by the first multi-link device, the state of the second link to a single-receive-chain enabled state when the first multi-link device receives, by using the second link, a second frame sent by the second multi-link device, wherein the second frame is used for indicating to switch the state of the second link to the single-receive-chain enabled state.

4. The method according to any one of claims 1 to 3, wherein the first multi-link device has a plurality of stations, and the second link is a link corresponding to a station in an awake state in the first multi-link device.

5. The method according to any one of claims 1 to 4, wherein the first frame carries a traffic identifier (TID), and the second link is a link mapped to the TID.

6. The method according to any one of claims 1 to 4, wherein after the making, by the first multi-link device, one or more second links be in a multi-receive-chain enabled state, the method further comprises:
receiving, by the first multi-link device by using the first link, a third frame sent by the second multi-link device to the first multi-link device, wherein the third frame comprises a traffic identifier (TID); and
switching, by the first multi-link device, a state of a target link in the one or more second links to the single-receive-chain enabled state, wherein the target link is a link not mapped to the TID in the one or more second links.

7. The method according to any one of claims 1 to 4, wherein the first frame carries indication information used for indicating the one or more second links, and before the making, by the first multi-link device, one or more second links be in a multi-receive-chain enabled state, the method further comprises:
determining, by the first multi-link device, the one or more second links based on the indication information.

8. The method according to claim 7, wherein the first frame is a data frame, the first frame comprises a high throughput control (HT control) field of a high efficiency (HE) type, the high throughput control field comprises an A-control (A-control) subfield, the A-control subfield comprises a control (control) subfield, the control subfield comprises a control information (control information) subfield and a control identifier (control ID) subfield, the control information subfield carries the indication information, the control identifier subfield carries a control identifier, and the control identifier is used for indicating that the control information subfield carries the indication information.

9. The method according to claim 7, wherein the first frame is a control frame, and the indication information is carried in the following one or more subfields in a frame control (frame control) field of the first frame: a to distributed system (to DS) subfield, a from distributed system (from DS) subfield, a more fragment (more frag) subfield, a retry (retry) subfield, a protected frame (protected frame) subfield, or a +high throughput control/order (+HTC/order) subfield.

10. The method according to claim 7, wherein the first frame is a control frame, a frame control (frame control) field of the first frame comprises a subtype (subtype) subfield, the subtype subfield is used for indicating that the first frame carries an indication information field, and the indication information field carries the indication information; or
a frame control (frame control) field of the first frame comprises a subtype (subtype) subfield, the subtype subfield is used for indicating that the first frame carries an extended control (extended control) field, the extended control field is used for indicating that the first frame carries an indication information field, and the indication information field carries the indication information.

11. The method according to claim 7, wherein the first frame is a trigger frame, a user information (user info) field of the first frame comprises an association identifier AID 12 subfield, an AID subfield, and an indication information subfield, the AID 12 subfield is set to a specific value for indicating that the user information field carries the AID subfield and the indication information subfield, the AID subfield carries an identifier of a receiver, and the indication information subfield carries the indication information.

12. A first multi-link device, comprising:
a communications unit, configured to receive, by using a first link, a first frame sent by a second multi-link device to the first multi-link device; and
a processing unit, configured to make one or more second links be in a multi-receive-chain enabled state, wherein the second link is a link that is between the first multi-link device and the second multi-link device and that is different from the first link.

13. The device according to claim 12, wherein
the processing unit is further configured to make the first link be in the multi-receive-chain enabled state after the communications unit receives, by using the first link, the first frame sent by the second multi-link device.

14. The device according to claim 12 or 13, wherein
the communications unit is further configured to perform frame interaction with the second multi-link device by using the second link after the processing unit makes the one or more second links be in the multi-receive-chain enabled state; and the processing unit is further configured to switch the state of the second link to a single-receive-chain enabled state when a frame interaction sequence on the second link ends; or
the processing unit is further configured to switch the state of the second link to a single-receive-chain enabled state when the communications unit does not receive, by using the second link within predetermined time, any frame sent by the second multi-link device to the first multi-link device after the processing unit makes the one or more second links be in the multi-receive-chain enabled state; or
the communications unit is further configured to receive, by using the second link, a second frame sent by the second multi-link device, wherein the second frame is used for indicating to switch the state of the second link to a single-receive-chain enabled state; and the processing unit is further configured to switch the state of the second link to the single-receive-chain enabled state.

15. The device according to any one of claims 12 to 14, wherein the first multi-link device has a plurality of stations, and the second link is a link corresponding to a station in an awake state in the first multi-link device.

16. The device according to any one of claims 12 to 15, wherein the first frame carries a traffic identifier (TID), and the second link is a link mapped to the TID.

17. The device according to any one of claims 12 to 15, wherein
the communications unit is further configured to receive, by using the first link, a third frame sent by the second multi-link device to the first multi-link device after the processing unit makes the one or more second links be in the multi-receive-chain enabled state, wherein the third frame comprises a traffic identifier (TID); and
the processing unit is further configured to switch a state of a target link in the one or more second links to the single-receive-chain enabled state, wherein the target link is a link not mapped to the TID in the one or more second links.

18. The device according to any one of claims 12 to 15, wherein the first frame carries indication information used for indicating the one or more second links, and
the processing unit is further configured to determine the one or more second links based on the indication information before making the one or more second links be in the multi-receive-chain enabled state.

19. The device according to claim 18, wherein the first frame is a data frame, the first frame comprises a high throughput control (HT control) field of a high efficiency (HE) type, the high throughput control field comprises an A-control (A-control) subfield, the A-control subfield comprises a control (control) subfield, the control subfield comprises a control information (control information) subfield and a control identifier (control ID) subfield, the control information subfield carries the indication information, the control identifier subfield carries a control identifier, and the control identifier is used for indicating that the control information subfield carries the indication information.

20. The device according to claim 18, wherein the first frame is a control frame, and the indication information is carried in the following one or more subfields in a frame control (frame control) field of the first frame: a to distributed system (to DS) subfield, a from distributed system (from DS) subfield, a more fragment (more frag) subfield, a retry (retry) subfield, a protected frame (protected frame) subfield, or a +high throughput control/order (+HTC/order) subfield.

21. The device according to claim 18, wherein the first frame is a control frame, a frame control (frame control) field of the first frame comprises a subtype (subtype) subfield, the subtype subfield is used for indicating that the first frame carries an indication information field, and the indication information field carries the indication information; or
a frame control (frame control) field of the first frame comprises a subtype (subtype) subfield, the subtype subfield is used for indicating that the first frame carries an extended control (extended control) field, the extended control field is used for indicating that the first frame carries an indication information field, and the indication information field carries the indication information.

22. The device according to claim 18, wherein the first frame is a trigger frame, a user information (user info) field of the first frame comprises an association identifier AID 12 subfield, an AID subfield, and an indication information subfield, the AID 12 subfield is set to a specific value for indicating that the user information field carries the AID subfield and the indication information subfield, the AID subfield carries an identifier of a receiver, and the indication information subfield carries the indication information.

23. A communications apparatus, comprising at least one processor and a communications interface, wherein the processor runs computer programs, to perform the method according to any one of claims 1 to 11.

24. A computer-readable storage medium, wherein the computer-readable storage medium is configured to store computer programs, and when the computer programs are executed, the method according to any one of claims 1 to 11 is implemented.

25. A communication apparatus, wherein the communication apparatus is configured to perform the method according to any one of claims 1 to 11.

26. A program, wherein when the program is executed by a computer, the method according to any one of claims 1 to 11 is implemented.
